# EUROPEAN PATENT SPECIFICATION

(11) **EP 2 171 788 B1**
(45) Date of publication and mention of the grant of the patent: **14.09.2011**
(21) Application number: 08776350.4
(22) Date of filing: 11.07.2008
(51) Int. Cl.: H01M 8/04

(54) **FUEL CELL, FUEL CELL-EQUIPPED VEHICLE, AND MEMBRANE ELECTRODE UNIT**
BRENNSTOFFZELLE, DAMIT AUSGESTATTES FAHRZEUG UND MEMBRANELEKTRODENEINHEIT
PILE À COMBUSTIBLE, VÉHICULE ÉQUIPÉ D'UNE PILE À COMBUSTIBLE, ET UNITÉ MEMBRANE-ÉLECTRODE

(30) Priority: 18.07.2007 JP 2007186659
(43) Date of publication of application: 07.04.2010
(73) Proprietor: Toyota Jidosha Kabushiki Kaisha, Toyota-shi, Aichi-ken 471-8571 (JP)
(72) Inventor: OGAWA, Tomohiro, Toyota-shi Aichi-ken 471-8571 (JP); SHIBATA, Kazunori, Toyota-shi Aichi-ken 471-8571 (JP)
(74) Representative: Kuhnen & Wacker
(86) International application number: PCT/IB2008/001813
(87) International publication number: WO 2009/010845

(56) References cited:
- EP-A- 1 758 186
- EP-A- 1 777 770
- US-A1- 2003 039 876
- US-A1- 2005 142 427

## Description

### BACKGROUND OF THE INVENTION

### 1. Field of the Invention

The invention relates to a fuel cell, a fuel cell-equipped vehicle, and a membrane electrode unit.

### 2. Description of the Related Art

A circulation-type fuel gas supply passage is utilized as a structure for supplying fuel gas to a fuel cell stack. A reason why the fuel gas supply passage is circulation type is to discharge nitrogen gas, which builds up in the fuel gas supply passage and impedes supply of fuel gas, into the outside of the fuel cell stack. Nitrogen gas builds up in the fuel gas supply passage because nitrogen gas enters from an oxidant gas passage into the fuel gas supply passage through an electrolyte. Meanwhile, an unsteady operation mode has also been proposed, in which the fuel gas supply passage is non-circulation type, and a buffer for collecting nitrogen gas is provided outside the fuel cell stack via a valve, and fuel gas is supplied while repeating opening of the valve and supply of fuel gas with the valve closed, which is accompanied with pressure increase (Japanese Patent Application Publication No. 2005-243476, for example).

However, no consideration has been given to the idea of causing a fuel cell to steadily operate, in which the fuel gas supply passage is made non-circulation type.

A fuel cell according to US 2005/142427A1 further includes an electrolyte electrode assembly and a pair of separators sandwiching the electrolyte electrode assembly. Each of the separators is a single plate, and includes a plurality of circular disks. First protrusions and second protrusions are provided on both surfaces of the circular disk. The first protrusions contact the anode of the electrolyte electrode assembly to form a fuel gas flow field, and the second protrusions contact the cathode of the electrolyte electrode assembly to form an oxygen-containing gas flow field. The shape of the first protrusion is different from the shape of the second protrusion. The first and second protrusions are coaxial with each other.

Document EP 1 758 186 A2 discloses a fuel cell which includes a membrane electrode assembly and a bipolar plate disposed outside the membrane electrode assembly. The bipolar plate is porous, and has first gas passages formed on the top surface through which gas is passed, second gas passages formed on the undersurface through which gas is passed, communicating passages which allow the first gas passages and second gas passages to communicate, a gas inlet connected to one of the first gas passages and second gas passages for supplying gas, and a gas outlet connected to the other of the first gas passages and second gas passages for discharging gas.

A semi-passive fuel cell system is provided in EP 1 777 770 A. There, a stack in which a plurality of unit cells are laterally stacked with one another is provided. Each unit cell includes a membrane-electrode assembly and bipolar plates located on both sides of the membrane-electrode assembly. The membrane-electrode assembly includes an electrolyte membrane, a cathode electrode, and an anode electrode. The cathode and anode electrodes, respectively, are formed on each side of the electrolyte membrane. Also provided are a means for supplying fuel and a means for supplying air. Each of the bipolar plates has air paths formed on a surface facing the cathode electrode and extending from an upper end to a lower end of the bipolar plate. The air supply means includes ducts which are respectively installed on an upper end and a lower end of the stack, and includes a means for blowing air through the ducts.

Document US 2003/039876 A1 finally discloses an electrochemical fuel cell comprises at least one fluid distribution layer comprising a substantially fluid impermeable sheet material which is rendered fluid permeable at least in the active area through the non-uniform application of perforations. In some embodiments, the size of the perforations in the fluid distribution layer increases in the reactant flow direction. In other embodiments, the density of the perforations in the fluid distribution layer increases in the reactant flow direction. The fluid permeability of the fluid distribution layer may also increase from the inlet to a mid-point between the inlet and the outlet and then decrease thereafter to the outlet.

### SUMMARY OF THE INVENTION

The invention provides a technology for causing a fuel cell to steadily operate, in which a fuel gas supply passage is made non-circulation type, in a fuel cell stack.

A fuel cell according to a first aspect of the invention includes a membrane electrode unit, comprising: an electrolyte; an anode that is placed on one side of the electrolyte and has a fuel gas consumption surface on which fuel gas is consumed; a cathode that is placed on the other side of the electrolyte and has an oxidant gas consumption surface on which oxidant gas is consumed; and a fuel gas passage including a first passage for distributing fuel gas to previously set regions on the fuel gas supply surface, a second passage for supplying the distributed fuel gas to the regions, and a fuel gas supply portion for supplying fuel gas from the first passage to the second passage. The fuel cell is configured to operate while consuming most of the supplied fuel gas in the regions on the fuel gas consumption surface, and the fuel gas passage has a fuel gas leakage suppression portion for suppressing leakage of fuel gas between the first passage and the second passage.

In the fuel gas passage of the first aspect of the invention, the leakage of fuel gas between the first passage for distributing fuel gas to previously set regions on the fuel gas supply surface and the second passage for supplying the distributed fuel gas to the regions is suppressed, so that it is possible to promote the uniformization of distribution of hydrogen gas by suppressing penetration of nitrogen gas from the second passage while fuel gas is diffused. For example, the "first passage" herein may be regarded as the hydrogen electrode-side porous passage 14h in the embodiment; the "second passage" may be regarded as the hydrogen electrode-side electrode layer 22 in the embodiment.

In the above-described fuel cell, at least one of the first passage and the second passage is formed by a porous member, and the fuel gas leakage suppression portion is formed as a peripheral portion of the porous member that has a porosity lower than a porosity of an inner portion of the porous member.

In the above-described fuel cell, the fuel gas leakage suppression portion may be a member that is formed in one body, which extends to at least part of a peripheral portion of the first passage and at least part of a peripheral portion of the second passage. With this configuration, it is possible to increase the stiffness by assembling the fuel gas passage in one unit.

In the above-described fuel cell, the fuel gas leakage suppression portion may be a spacer that is disposed on at least one side of the fuel gas supply portion, and provides at least one of the first passage and the second passage.

(cancelled)

A vehicle according to a second aspect of the invention includes the fuel cell according to any one of the above aspects, and a driving unit that drives the vehicle according to electric power supply from the fuel cell.

(cancelled)

The fuel cells according to the invention can be understood as those realizing an operational state in which electricity is continuously generated in a state where the partial pressure of impurities, such as nitrogen, on the anode (hydrogen electrode) and the partial pressure of impurities, such as nitrogen, on the cathode (air electrode) are balanced. The "balanced state" herein means the equilibrium state, for example, and does not necessarily mean the state in which these partial pressures are equal to each other.

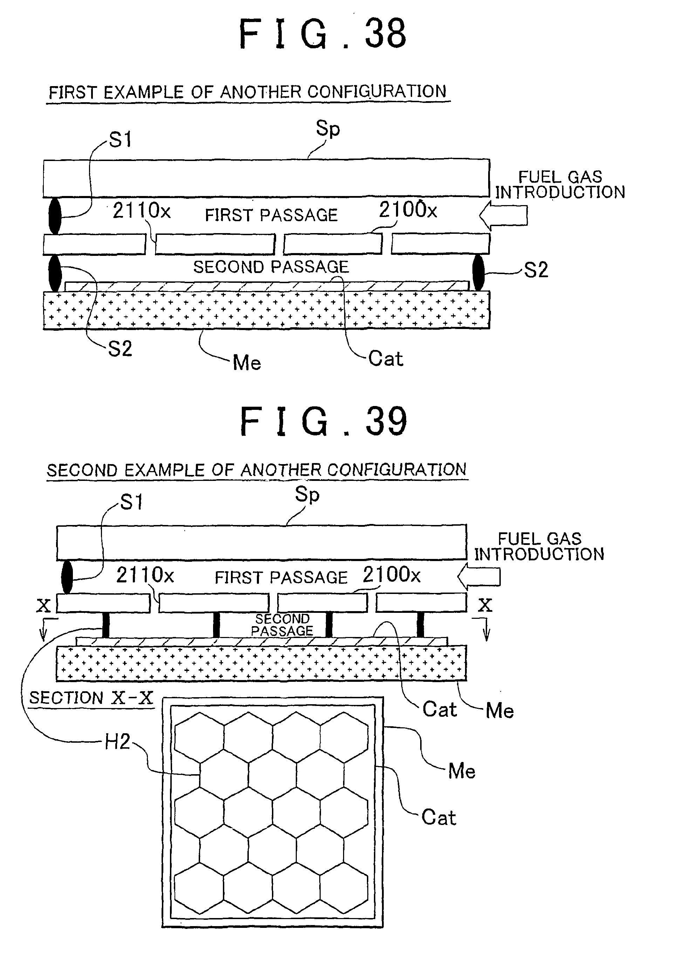

The fuel cells according to the invention further encompass the configurations as shown in FIGS. 38 and 39, for example. The configuration example shown in FIG. 38 has the first passage and the second passage. The first passage is disposed upstream of the second passage. The first passage and the second passage communicate with each other via highly resistant communication orifices 2100x that are more resistant to gas flow than either the first passage or the second passage. These passages introduce fuel gas from outside the electricity generation area (outside the fuel cell) through the fuel gas inlet port (manifold). Specifically, with regard to supply of fuel gas to the second passage, fuel gas is introduced from the first passage mainly through the highly resistant communication orifices 2100x (for example, only through the highly resistant communication orifices 2100x).

Although the first passage and the second passage can be formed by using porous members as shown in the embodiment described later, these passages may be formed by interposing the seal members S1 and S2 (FIG. 38) or by using a honeycomb structure member H2 (FIG 39), for example.

In order to provide the highly resistant communication orifices 2100x, a plate-like member can be used in which a plurality of introduction orifices 2110x (through holes) as shown in FIGS. 38 and 39, for example, are distributed all over the plane. The highly resistant communication orifices 2100x have at least one of the following functions. The first function is "a function of restricting supply of fuel gas to the regions in the second passage that are close to the fuel gas inlet." The second function is "a function of suppressing planar unevenness of gas pressure exerted in the direction perpendicular to the plane of the anode reaction portion (fuel gas consumption surface) along which the second passage is extended." The third function is "a function of changing the direction of flow of fuel gas that flows along a plane, along which the first passage is extended, to the orthogonal direction (that is, the direction that intersects the plane).

The fuel cells according to the invention may also be understood as fuel cell systems as described below. Specifically, the fuel cell system is such that most of the fuel gas supplied is consumed on an anode reaction portion, the fuel cell system including: an inlet for taking anode gas into an electricity generation cell; a first gas passage for introducing anode gas, which is supplied through the inlet port, in the direction parallel to the plane of the cell; and a highly resistant portion that is extended along the anode reaction portion, and introduces anode gas from the first gas passage to the second gas passage through a plurality of connection orifices, formed in the highly resistant portion, that are distributed over the plane parallel to the cell, while the highly resistant portion is more resistant to flow than the first gas passage and hinders inflow of anode gas from the first gas passage to the second gas passage.

The fuel cells according to the invention may be understood also as fuel cell systems with a configuration as described below. Specifically, the fuel cell system may have the following configurations. In one configuration, the highly resistant portion has one connection orifice corresponding to one region on the anode reaction portion and another connection orifice corresponding to another region, and, in the anode gas that is consumed in the one region, the proportion of the gas that has passed through the one connection orifice of the highly resistant portion is greater than the proportion of the gas that has passed through the another connection orifice. In another configuration, the highly resistant portion has one connection orifice corresponding to one region on the anode reaction portion and another connection orifice corresponding to another region, and, in the anode gas that has passed through the one connection orifice, the proportion of the gas that is consumed in the one region on the anode reaction portion is higher than the proportion of the gas that is consumed in the another region.

Meanwhile, the cathode passage may have a configuration in which at least the highly resistant connection orifice is not provided. The cathode passage may be configured so as to have only the first gas passage for introducing cathode gas, which is supplied through the cathode inlet port, in the direction parallel to the plane of the cell, that is, the second passage is not provided. However, when the gas diffusion layer is considered as the second passage, the cathode passage may be configured to have the first and second passages in combination. In any case, when the highly resistant communication orifices are eliminated only from the cathode electrode side, it is expected that the work required of the cathode gas feeder is reduced and the performance of discharging water from the cathode electrode is improved, which is preferable particularly in the case of the fuel cell system that is inferior in performance of discharging water from the anode electrode, that is, the fuel cell system, in which fuel gas is not steadily discharged.

Note that the invention can be implemented in various other forms, such as a fuel cell, a fuel cell stack manufacturing method, a fuel cell system, and a fuel cell-equipped vehicle.

### BRIEF DESCRIPTION OF THE DRAWINGS

The foregoing and further features and advantages of the invention will become apparent from the following description of example embodiments with reference to the accompanying drawings, wherein like numerals are used to represent like elements, and wherein:
FIG. 1 is a schematic configuration diagram of a fuel cell-equipped vehicle 1000 according to an embodiment of the invention;
FIG. 2 is a block diagram showing a configuration of a fuel cell system 210 according to a related art;
FIG 3 shows graphs showing operational statuses of the fuel cell system 210 according to the related art when the circulation in a fuel gas passage 225 is stopped;
FIG 4 is a block diagram showing a configuration of a fuel cell system 210n according to the embodiment of the invention;
FIG 5 is an explanatory diagram showing a schematic configuration of a fuel cell stack 100 according to the related art;
FIG 6 is an explanatory diagram showing internal passages in the fuel cell stack 100 according to the related art;
FIG. 7 is an explanatory diagram showing a situation in which an accumulation Cn of nitrogen is caused while discharge of fuel gas is stopped in the fuel cell stack 100 according to the related art;
FIG. 8 is a flow chart showing a mechanism of accumulation of nitrogen gas in the fuel gas passage, which has been inferred by the present inventors;
FIG. 9 is an explanatory diagram showing a situation in which an accumulation of nitrogen gas occurs in the fuel gas passage;
FIG. 10 is an explanatory diagram showing a schematic configuration of a fuel cell stack 100n according to an embodiment;
FIG. 11 is an explanatory diagram showing internal passages of a fuel cell stack 100n according to the embodiment;
FIG. 12 is an explanatory diagram showing an arrangement of a fuel gas supply plate 21n in the fuel cell stack 100n according to the embodiment;
FIG. 13 is an explanatory diagram showing a manner in which fuel gas is supplied through the fuel gas supply plate 21n in the fuel cell stack 100n according to the embodiment;
FIG. 14 is a flow chart showing an example of a process of making inference about the mechanism of stabilizing supply of hydrogen gas;
FIG. 15 is an explanatory diagram showing a situation in which an accumulation of nitrogen gas is dispersed in the fuel gas passage;
FIG. 16 is an explanatory diagram showing a first modification of the fuel gas passage;
FIG. 17 is an explanatory diagram showing a second modification of the fuel gas passage;
FIG. 18 is an explanatory diagram showing the second modification of the fuel gas passage;
FIG. 19 is an explanatory diagram showing another configuration of the second modification;
FIG. 20 is an explanatory diagram showing a third modification of the fuel gas passage;
FIG. 21 is an explanatory diagram showing a fourth modification of the fuel gas passage;
FIG. 22 is an explanatory diagram showing calculation formulae related to the performance of fuel cells;
FIG. 23 is an explanatory diagram showing a calculation formula related to the performance of fuel cells;
FIG. 24 is an explanatory diagram showing a calculation formula related to the performance of fuel cells;
FIG. 25 is an explanatory diagram showing the difference between the density of the hydrogen electrode-side porous passage 14h and the density of the gas diffusion layer of a hydrogen electrode 22, which are located on the upstream side and the downstream side, respectively, of the fuel gas supply plate 21n according to the embodiment;
FIG. 26 is an explanatory diagram showing the gas diffusion layer of a hydrogen electrode 22v2 of a second modification;
FIG. 27 is an explanatory diagram showing the gas diffusion layer of a hydrogen electrode 23v3 of a third modification;
FIG. 28 is an explanatory diagram showing the gas diffusion layer of a hydrogen electrode 22v4 of a fourth modification;
FIG. 29 is an explanatory diagram showing the gas diffusion layer of a hydrogen electrode 22v5 of a fifth modification;
FIG. 30 is an explanatory diagram showing the gas diffusion layer of a hydrogen electrode 22v6 of a sixth modification;
FIG. 31 is an explanatory diagram showing an air electrode-side porous passage 14av1 of a first modification;
FIG. 32 is an explanatory diagram showing an air electrode-side porous passage 14av2 of a second modification;
FIG. 33 is an explanatory diagram showing inner passages of a fuel cell stack having the air electrode-side porous channel member 14av1 of the first modification;
FIG. 34 is an explanatory diagram showing an air electrode-side porous passage 14av3 of a third modification;
FIG. 35 is an explanatory diagram showing an air electrode-side porous passage 14av4 of a fourth modification;
FIG. 36 is an explanatory diagram showing a fuel gas supply plate 21v5 of a fifth modification;
FIG. 37 is an explanatory diagram showing a fuel gas supply plate 21v6 of a sixth modification;
FIG. 38 shows a first example of another configuration of passages in a fuel cell; and
FIG. 39 shows a second example of another configuration of passages in a fuel cell.

### DETAILED DESCRIPTION OF EMBODIMENTS

An embodiment of the invention will be described below in the following order. Specifically, a configuration of a vehicle equipped with a fuel cell according to the embodiment of the invention, a configuration of fuel cell systems according to a related art and the embodiment, a configuration of a fuel cell stack according to a related art, a configuration of a fuel cell stack according to the embodiment, a process of manufacturing a fuel cell stack according to the embodiment, and modifications will be described in this order.

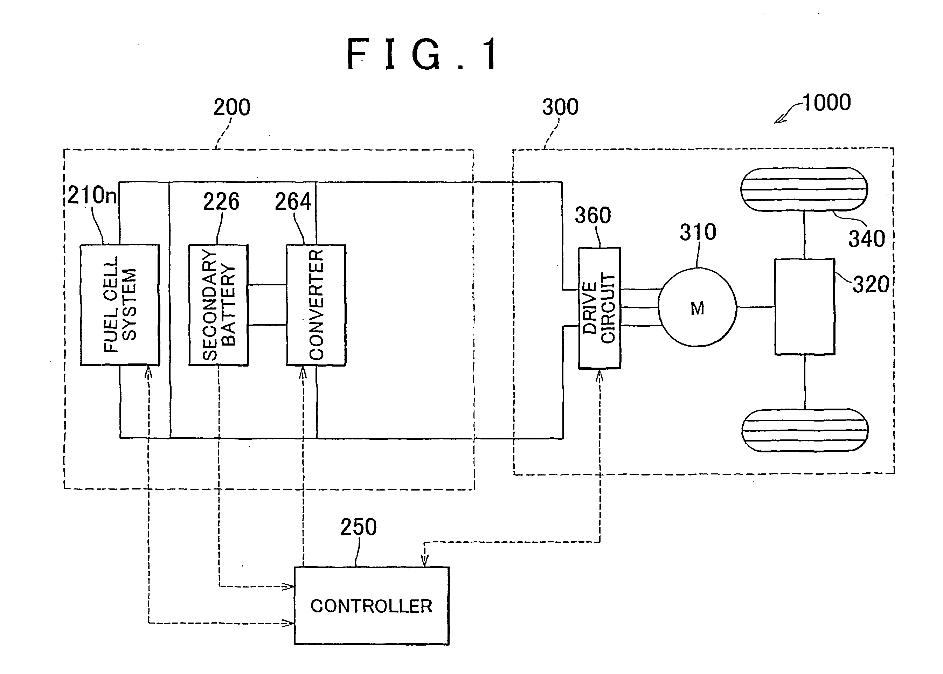

FIG. 1 is a schematic configuration diagram of the fuel cell-equipped vehicle 1000 according to the embodiment of the invention. The fuel cell-equipped vehicle 1000 includes a power supply system 200, a load portion 300, and a controller 250. The power supply system 200 supplies electric power as motive energy to the fuel cell-equipped vehicle 1000. The load portion 300 converts the supplied electric power into the mechanical motive power for driving the fuel cell-equipped vehicle 1000. The controller 250 controls the power supply system 200 and the load portion 300.

The power supply system 200 includes a fuel cell system 210n, a secondary battery 226, which is also referred to as a capacitor, and a DC-DC converter 264. The load portion 300 includes a drive circuit 360, a motor 310, a gear mechanism 320, and wheels 340. The fuel cell system 210n may be small, lightweight, and high power in order to mount the system on a vehicle.

The controller 250 is electrically connected to the fuel cell system 210n, the DC-DC converter 264, and the drive circuit 360, and performs various control operations including the control of these circuits. The controller 250 executes the computer programs stored in a memory, not shown, incorporated in the controller 250 to perform various control operations. Various storage media, such as a ROM and a hard disk drive, can be used as the memory.

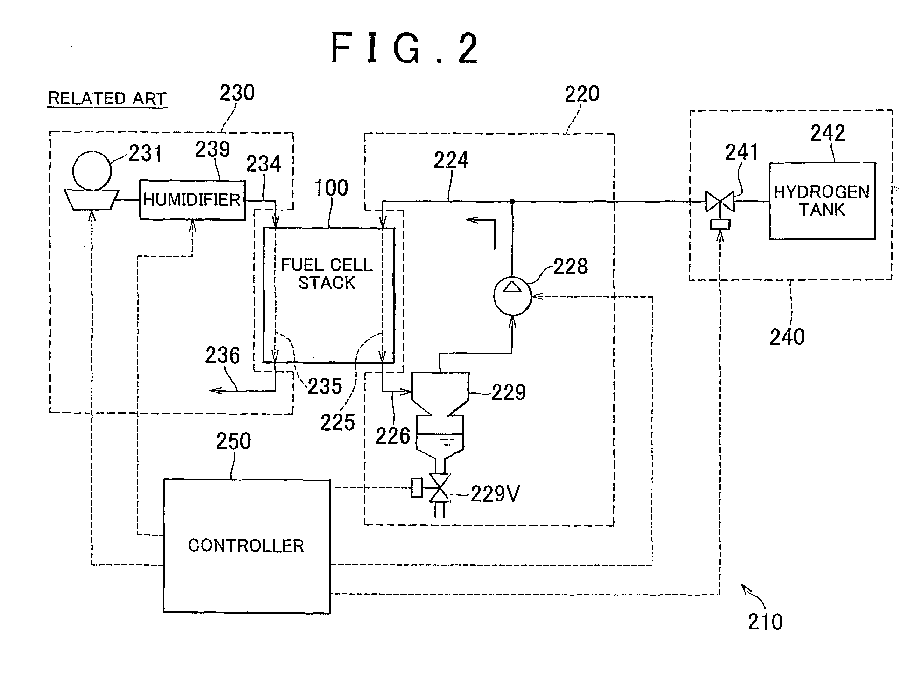

FIG. 2 is a block diagram showing a configuration of a fuel cell system 210 according to the related art. The fuel cell system 210 includes a fuel cell stack 100, an air supply system 230 for supplying air as oxidant gas to the fuel cell stack 100, a hydrogen gas circulation system 220 for circulating hydrogen gas as fuel gas through the fuel cell stack 100, and a hydrogen gas supply system 240 for supplying hydrogen gas to the hydrogen gas circulation system 220. The controller 250 controls the air supply system 230, the hydrogen gas supply system 240, and the hydrogen gas circulation system 220.

The fuel cell stack 100 is a solid polymer electrolyte fuel cell having a stacked structure in which a plurality of fuel cells described later are stacked. Each fuel cell has an air passage 235 and a fuel gas passage 225 therein.

The air supply system 230 is a system for supplying humidified air to the air passage 235 in each fuel cell. The air supply system 230 includes a blower 231 for taking in the outside air, a humidifier 239 for humidifying the intake air, humidified air supply piping 234 for supplying the humidified air to the air passage 235, and discharge piping 236 for discharging air from the air passage 235.

The hydrogen gas supply system 240 includes a hydrogen tank 242 for storing hydrogen gas, and a hydrogen valve 241 for controlling supply of hydrogen gas to the hydrogen gas circulation system 220.

The hydrogen gas circulation system 220 includes a circulation pump 228 for circulating hydrogen gas in the hydrogen gas circulation system 220, hydrogen gas supply piping 224 for supplying the hydrogen gas discharged from the circulation pump 228 to the fuel gas passage 225, exhaust gas piping 226 for supplying moist hydrogen gas from the fuel gas passage 225 to a gas/liquid separator 229, the gas/liquid separator 229 for separating water and hydrogen gas and supplying the hydrogen gas to the circulation pump 228, and a drain valve 229V.

A reason why such circulation passages 226, 229 and 228 are provided is that in the related art, the nitrogen gas that enters from the air passage 235 through an electrolyte layer described later is accumulated in the fuel gas passage 225, which disables the fuel cell stack 100 from generating electricity.

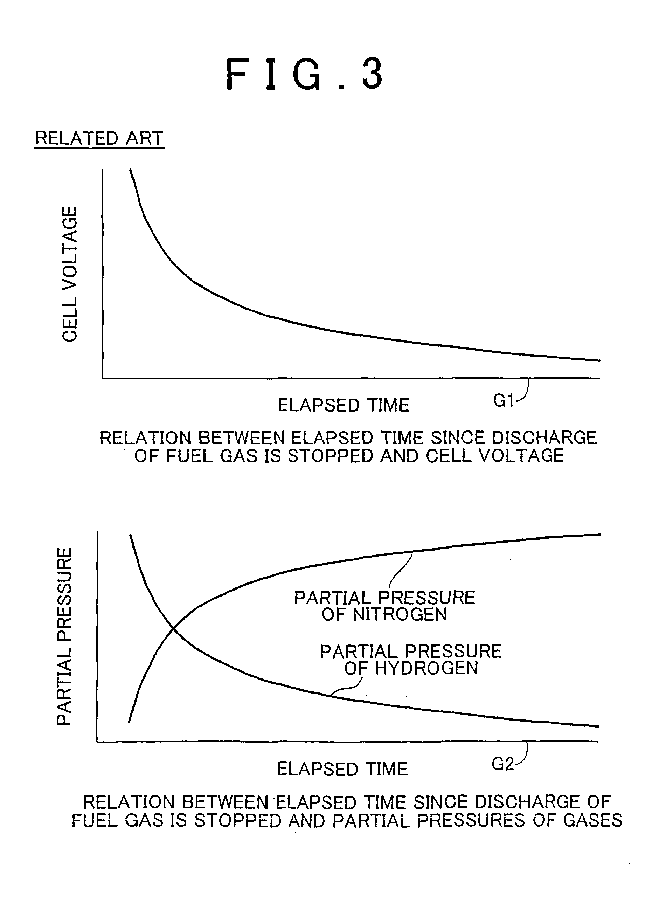

FIG. 3 shows graphs G1 and G2 showing operational statuses of the fuel cell system 210 according to the related art when the circulation through the fuel gas passage 225 is stopped. The graph G1 shows a relation between the elapsed time since discharge of fuel gas is stopped and cell voltage. The graph G2 shows relations between the elapsed time since discharge of fuel gas is stopped and partial pressures of gases (in the fuel gas passage 225).

As can be seen from the graph G1, the cell voltage gradually decreases with time. The decrease in the cell voltage is caused by the decrease in the partial pressure of hydrogen in the fuel gas passage 225 as shown in the graph G2. Such a decrease in the partial pressure of hydrogen is caused by the increase in the partial pressure of nitrogen gas that enters from the air passage 235 as described above. In order to suppress such decrease in the partial pressure of hydrogen, in the art proposed in Japanese Patent Application Publication No. 2005-243476 (JP-A-2005-243476), the system is configured such that hydrogen gas is supplied while raising the total pressure on purpose so that the partial pressure of hydrogen is maintained, overcoming the increase in the partial pressure of nitrogen. However, there is a limit on the allowable total pressure, and it is necessary to perform discharge periodically.

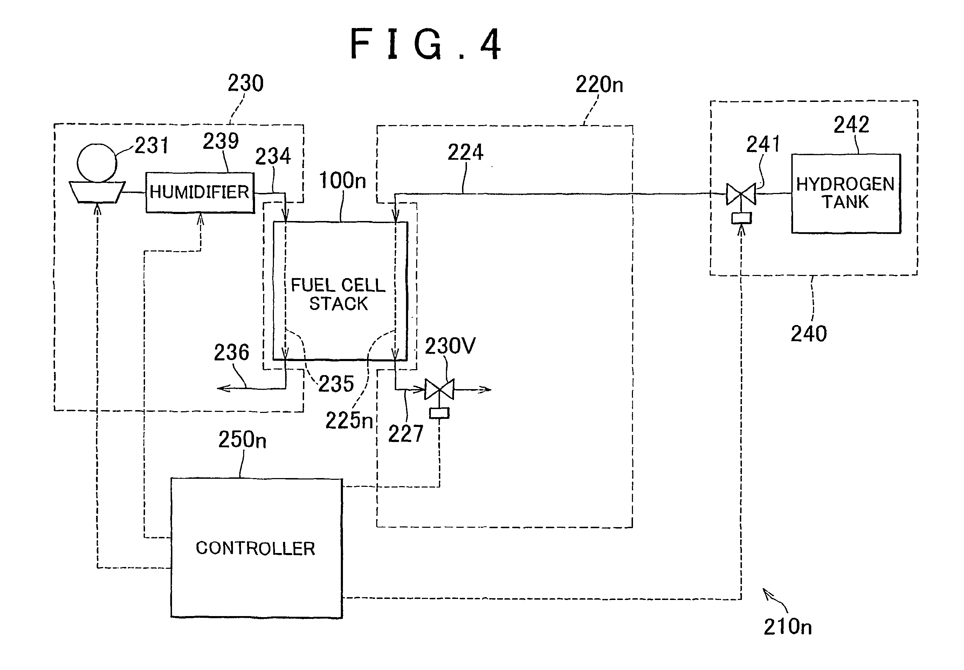

FIG. 4 is a block diagram showing a configuration of a fuel cell system 210n according to the embodiment of the invention. In the fuel cell system 210n, the circulation passages 226, 229 and 228 are removed, and the fuel cell system 210n includes gas discharging piping 227 for maintenance and a discharge valve 230V. Meanwhile, the fuel cell stack 100 is replaced by a fuel cell stack 100n. The fuel cell stack 100n is devised so that the fuel stack stably operates even when discharge of fuel gas is stopped.

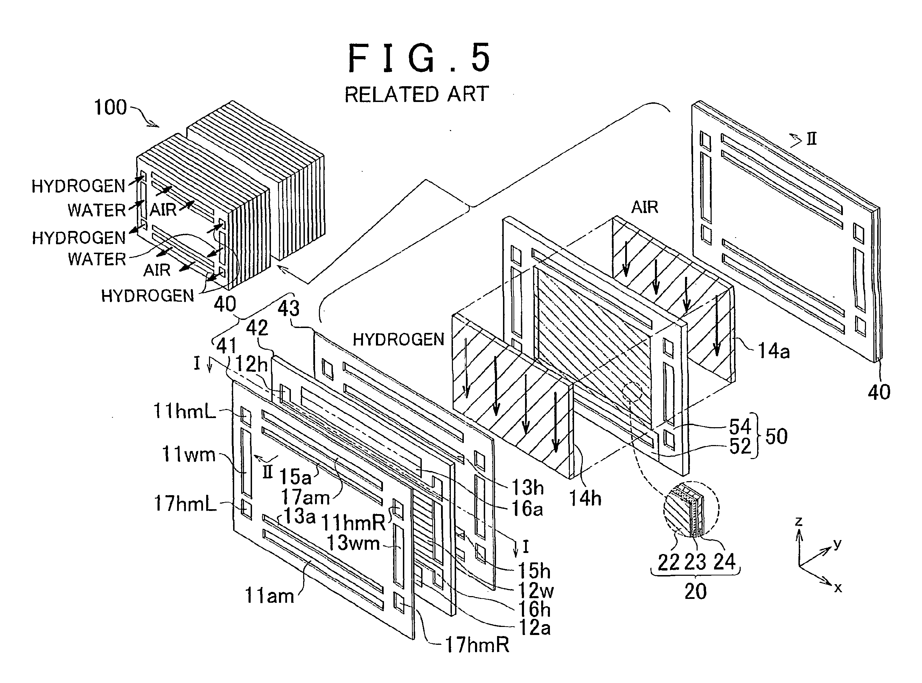

Before the description of the fuel cell stack 100n according to the embodiment of the invention, a typical configuration of the fuel cell stack according to the related art, and the mechanism of accumulation of nitrogen that has been clarified by the present inventors will be described with reference to FIGS. 5 to 9.

FIG. 5 is an explanatory diagram showing a schematic configuration of the fuel cell stack 100 according to the related art. The description of the related art and the embodiment described later will be given for the case of a solid polymer electrolyte fuel cell by way of example. In the fuel cell stack 100 of the related art, membrane electrode units 20, hydrogen electrode-side porous passages 14h, air electrode-side porous passages 14a, and separators 40 are alternately stacked, and on each side of the stack, a terminal, an insulator, and an end plate, not shown, are disposed so that the stack is sandwiched by these members, whereby the fuel cell stack 100 is formed.

The membrane electrode unit 20 is a portion in which electrochemical reactions of the fuel cell occur, and includes a hydrogen electrode-side electrode layer 22, an electrolyte membrane 23, and an air electrode-side electrode layer 24. The electrolyte membrane 23 has a proton conductive, ion-exchange membrane, which is made of solid polymer material. The hydrogen electrode-side electrode layer 22 and the air electrode-side electrode layer 24 are each formed by supporting catalyst on an electrically conductive carrier.

The hydrogen electrode-side porous passage 14h and the air electrode-side porous passage 14a provide passages of the reaction gases (the fuel gas that contains hydrogen, and the oxidant gas that contains oxygen) used in the electrochemical reactions in the membrane electrode unit 20, and has a function of collecting current. In general, the porous passages 14h and 14a can be formed of gas-permeable, electrically conductive material, such as carbon papers, carbon cloths, and carbon nanotubes.

A seal portion 50 is provided around the membrane electrode unit 20, and the two porous passages 14h and 14a to secure sealing for the passages of the reaction gases formed by the porous passages 14h and 14a. The seal portion 50 includes a gasket 52 and a frame-like seal 54.

The separator 40 is configured so as to form walls of the porous passages 14h and 14a, which function as passages of the reaction gases. For the separator 40, various materials can be used, such as dense carbon material made by compressing carbon to make the carbon impermeable to gas, baked carbon material, or stainless steel, as long as it is an electrically conductive material impermeable to the reaction gases. In this embodiment, the separator 40 is constructed as a three-layer separator in which a cathode-side separator 41 that contacts the air electrode-side porous passage 14a, an anode-side separator 43 that contacts the hydrogen electrode-side porous passage 14h, and an intermediate separator 42 disposed between the separators 41 and 43 are integrated.

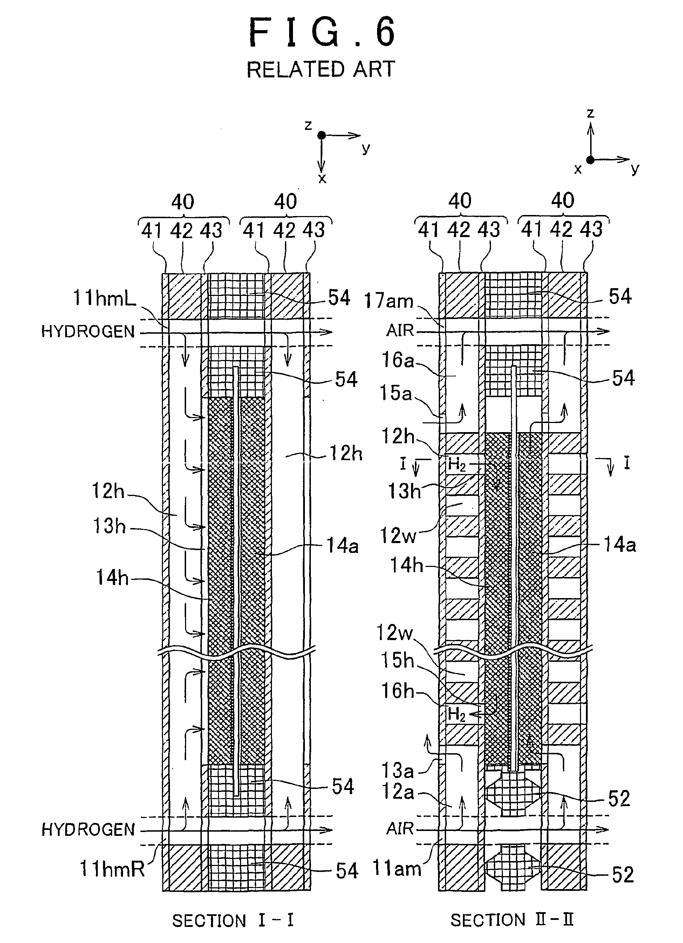

FIG. 6 is an explanatory diagram showing internal passages in the fuel cell stack 100 according to the related art along with FIG. 5. The passages in the fuel cell stack 100 include the fuel gas passage 225 (FIG. 2), the air passage 235 (FIG. 2), and a coolant passage. The coolant passage includes a coolant supply manifold 11wm, a coolant supply passage 12w, and a coolant discharge manifold 13wm, and is configured such that the coolant flows through these sections in this order.

The fuel gas passage 225 (FIG. 2) includes two fuel gas supply manifolds 11hmL and 11hmR, a fuel gas supply passage 12h, a fuel gas supply hole 13h, the hydrogen electrode-side porous passage 14h, a fuel gas discharge hole 15h, a fuel gas discharge passage 16h (FIG. 5) and two fuel gas discharge manifolds 17hmL and 17hmR (FIG. 5), and is configured such that fuel gas flows through these sections in this order.

The air passage 235 (FIG. 2) includes an air supply manifold 11am, an air supply passage 12a, an air supply hole 13a, the air electrode-side porous passage 14a, an air discharge hole 15a, an air discharge passage 16a (FIG. 5), and an air discharge manifold 17am (FIG. 5), and is configured such that air flows through these sections in this order.

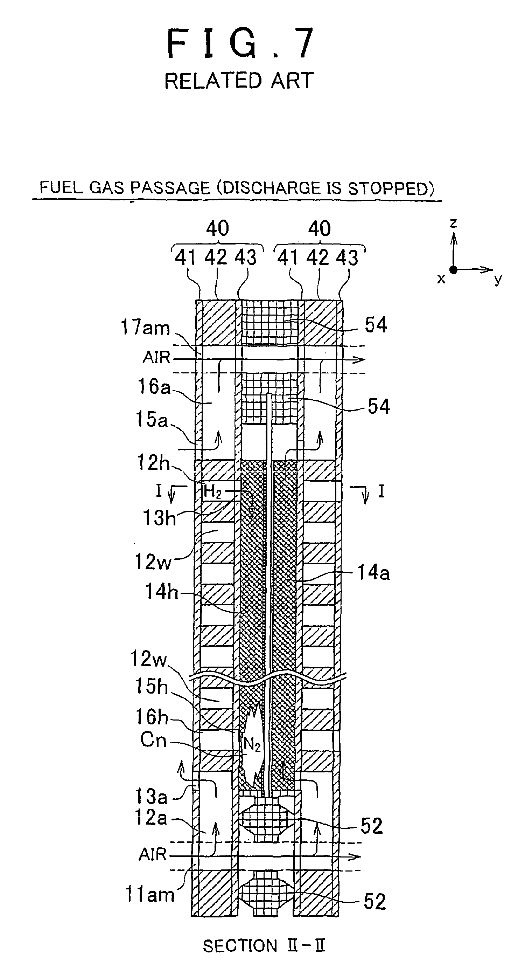

FIG. 7 is an explanatory diagram showing a situation in which an accumulation Cn of nitrogen gas is caused while discharge of fuel gas is stopped in the fuel cell stack 100 according to the related art. As can be seen from FIG. 7, the accumulation Cn of nitrogen gas occurs in a downstream region of the hydrogen electrode-side porous passage 14h.

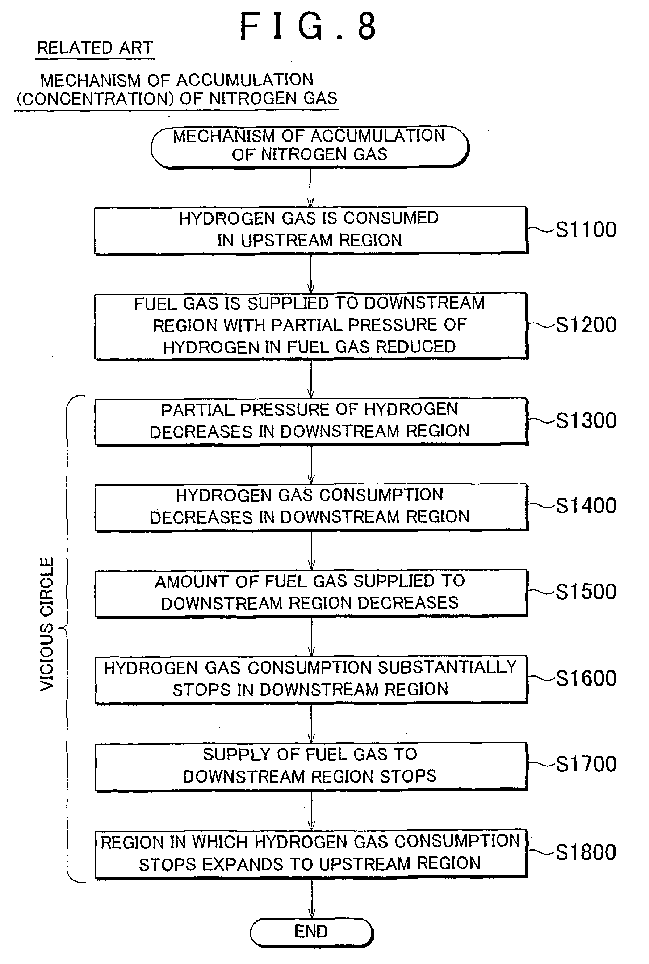

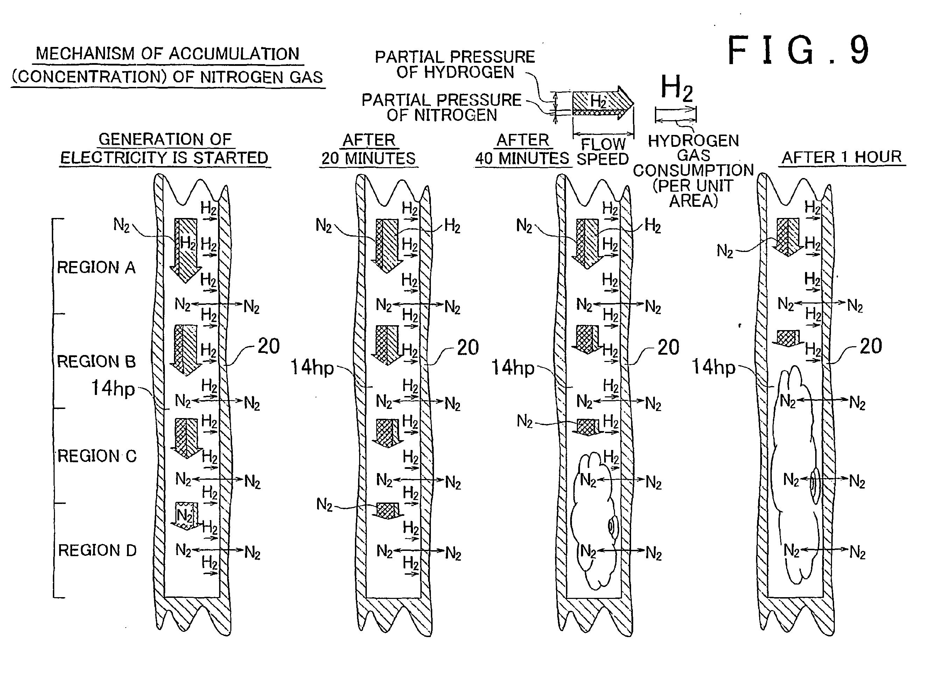

FIG. 8 is a flow chart showing a mechanism of accumulation of nitrogen gas in the fuel gas passage, which has been inferred by the present inventors. FIG. 9 is an explanatory diagram showing a situation in which an accumulation of nitrogen gas occurs in the fuel gas passage. In the fuel gas passage according to the related art, as can be seen from FIG. 9, fuel gas is supplied along the reaction surface (fuel gas consumption surface) of the membrane electrode unit 20 on which fuel gas is consumed, and therefore the phenomenon occurs that the partial pressure of hydrogen in the fuel gas decreases as the fuel gas flows downstream. Note that this inference is made in the course of creation of the present invention, and that the present invention is not premised on the existence of such mechanism.

If electricity generation is started under conditions where the partial pressure of hydrogen gas in the fuel passage (hydrogen electrode-side porous passage 14h) is uniform at the time of starting to generate electricity, supply of fuel gas is started when the membrane electrode unit 20 starts to attract and consume hydrogen due to the generation of electricity. While fuel gas is supplied, hydrogen gas is consumed in the regions (regions A to D) on the reaction surface of the membrane electrode unit 20, and the partial pressure of hydrogen in the fuel gas therefore decreases as the fuel gas flows downstream, according to the consumption.

Specifically, while fuel gas is supplied, when the fuel gas flows from the region A to the region B, the consumption of hydrogen gas in the region A on the membrane electrode unit 20 (step S1100) causes the partial pressure of hydrogen gas in the fuel gas supplied to the region B decreases (step S1200). Such a decrease in the partial pressure of hydrogen gas also occurs in the flow from the region B to the region C, and in the flow from the region C to the region D.

Thus, the fuel gas in which the partial pressure of hydrogen is very low as compared to that in the region A is supplied to the region D that is a downstream region (step S1300). As can be seen from the situation that appears 20 minutes later, shown in FIG. 9, such an extreme decrease in the partial pressure of hydrogen results in the decrease in consumption of hydrogen gas in the region D (step S1400), and therefore results in the decrease in supply of fuel gas (flow speed) (step S1500). Such a decrease in supply of the fuel gas synergistically and circulatively continues until the supply of fuel gas to the region D is stopped (step S1600).

As a result, as can be seen from the situation that appears 40 minutes later, shown in FIG. 9, the region D becomes the region in which nitrogen gas is accumulated, and fuel gas is no longer supplied (step S1700). In addition, such a synergistic vicious circle causes the region in which nitrogen gas is accumulated to expand to the upstream regions, the region C, the region B, and so on.

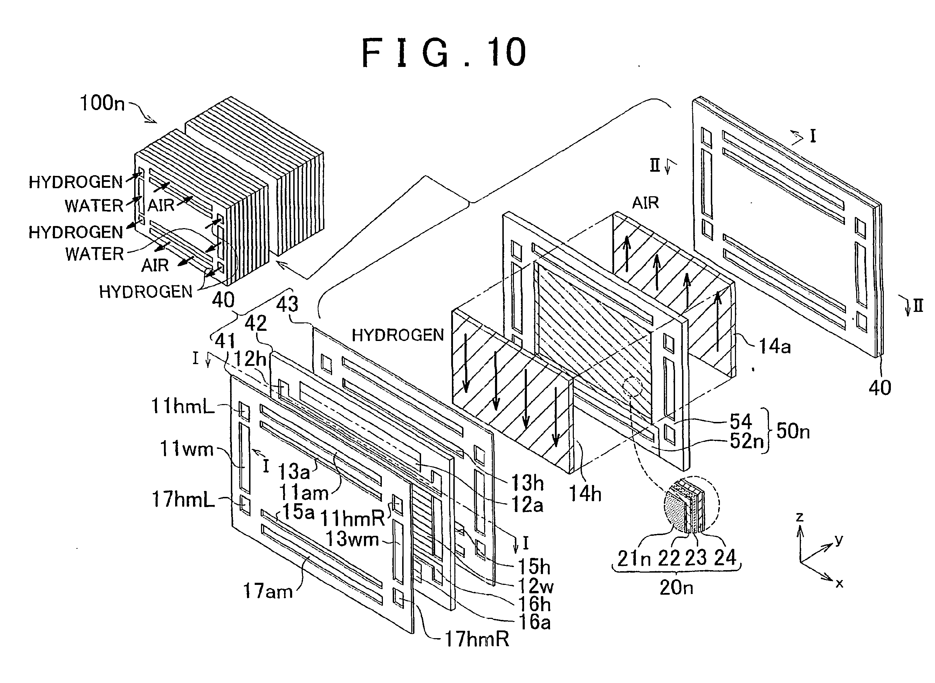

FIG. 10 is an explanatory diagram showing a schematic configuration of the fuel cell stack 100n according to an embodiment. The fuel cell stack 100n differs from the related art in that the fuel gas passage 225 (FIG. 2) is replaced by a newly created, fuel gas passage 225n, and the air passage 235 and the coolant passage are the same as those of the related art.

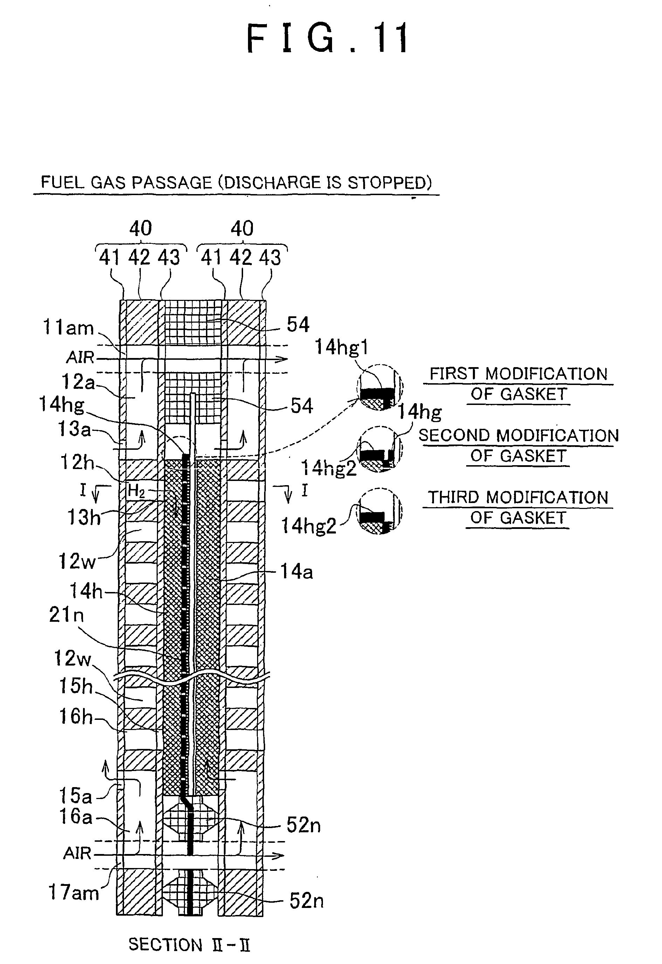

FIG. 11 is an explanatory diagram showing inner passages in the fuel cell stack 100n according to the embodiment along with FIG. 10. The fuel gas passage 225n differs from the fuel gas passage 225 according to the related art in that the fuel gas passage 225n is provided with: a fuel gas supply plate 21n for suppressing the accumulation of nitrogen gas in the fuel gas passage 225 caused while discharge of fuel gas is stopped; and a gasket 14hg and a gasket 52n that surround the hydrogen electrode-side electrode layer 22. A number of pores 211n whose diameter is about 1 mm are formed in the fuel gas supply plate 21n with 2 cm pitches, for example, and in addition, three air ports 212n that communicate with the air supply manifold 11am are formed in the fuel gas supply plate 21n.

The gasket 14hg and the gasket 52n each may be made of a material that has stiffness higher than that of the hydrogen electrode-side electrode layer 22 and has a resistance to deformation that is caused by compression force in the thickness direction. The gasket 14hg that surrounds the hydrogen electrode-side electrode layer 22 may be formed by impregnating the peripheral portion of the hydrogen electrode-side electrode layer 22 with a material for the gasket.

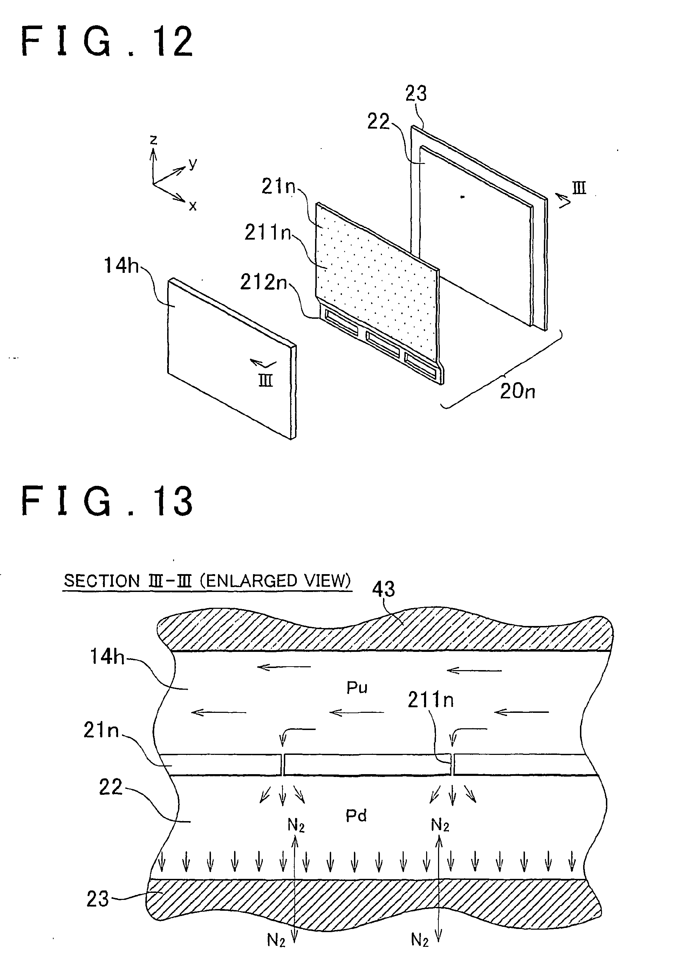

FIG. 12 is an explanatory diagram showing an arrangement of the fuel gas supply plate 21n in the fuel cell stack 100n according to the embodiment. The fuel gas supply plate 21n is sandwiched between the hydrogen electrode-side porous passage 14h and the hydrogen electrode-side electrode layer 22 of the membrane electrode unit 20. In this embodiment, the fuel gas supply plate 21n is formed as a metal plate that suppresses the leakage between the fuel gas passage and the oxidant gas passage. Thus, this embodiment is advantageous in that stiffness of the membrane electrode units 20n is enhanced, thermal contraction is suppressed, and the resistance to the differential pressure between the fuel gas and the oxidant gas is made strong.

The fuel gas supply plate 21n may be formed as part of the membrane electrode unit 20n by attaching the fuel gas supply plate 21n to the membrane electrode unit 20 as in the case of this embodiment, or may be formed as part of the hydrogen electrode-side porous passage 14h by attaching the fuel gas supply plate 21n to the hydrogen electrode-side porous passage 14h, or may be formed as a separate component. There is no need to provide the fuel gas passage in the form of a porous member. The fuel gas passage may be formed by a spacer (not shown) that is disposed on at least one of the upstream side and the downstream side of the fuel gas supply plate 21n.

FIG. 13 is an explanatory diagram showing a manner in which fuel gas is supplied through the fuel gas supply plate 21n in the fuel cell stack 100n according to the embodiment. The fuel gas supplied through the fuel gas supply hole 13h (FIG. 11) is distributed to pores 211n of the fuel gas supply plate 21n via the hydrogen electrode-side porous passage 14h. Fuel gas is supplied to the hydrogen electrode 22 through the pores 211n.

Because the hydrogen electrode-side porous passage 14h, which provides the passages for distributing fuel gas to the pores 211n, is separated from the hydrogen electrode 22 by the fuel gas supply plate 21n in this way, the decrease in the partial pressure of hydrogen described above (FIGS. 8 and 9) is suppressed. Meanwhile, the analyses and experiments conducted by the present inventors have revealed that the nitrogen gas that passes through the membrane electrode unit 20 and occurs on the hydrogen electrode 22 side also passes through the membrane electrode unit 20 from the hydrogen electrode-side porous passage 14h to the air electrode-side porous passage 14a, and therefore it is possible to maintain an equilibrium state. Note that the term "separate" herein has a broad meaning, which includes not only complete separation but also a separation such that a flow of fluid or a contact is prevented.

In this way, it has been confirmed by the experiments conducted by the present inventors that, when it is possible to stably maintain the state in which nitrogen gas is distributed near the membrane electrode unit 20, for example, it is possible to continuously supply fuel gas to the hydrogen electrode 22 side, and continuously and stably generate electricity without discharging and circulating fuel gas.

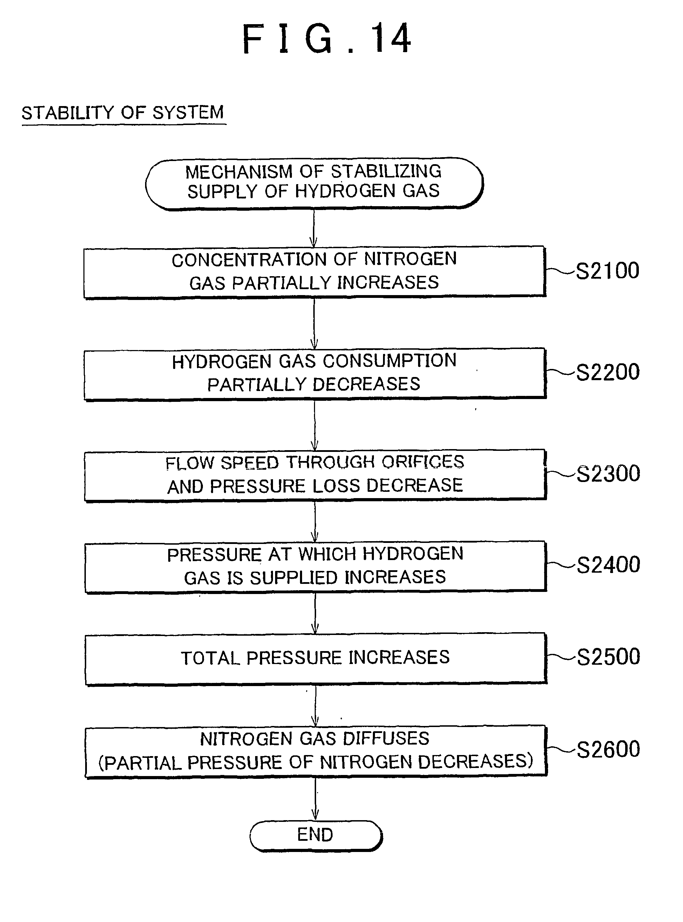

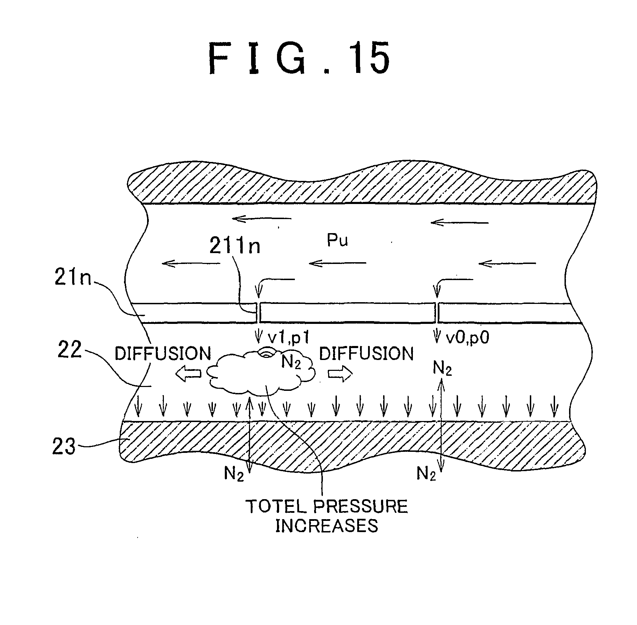

FIG. 14 is a flow chart showing an example of a process of making inference about the mechanism of stabilizing supply of hydrogen gas. FIG. 15 is an explanatory diagram showing a situation in which an accumulation of nitrogen gas is dispersed in the fuel gas passage. This inference shows a mechanism by which an increase in the partial pressure of nitrogen is eliminated, even when the partial pressure of nitrogen is partially raised by some disturbance. Specifically, even when the partial pressure of nitrogen gas is increased in a region, the increase in the partial pressure of nitrogen gas is eliminated due to the mechanism described below.

Specifically, as shown in FIG. 14, for example, when it is assumed that the partial pressure of nitrogen gas is increased in a region (step S2100), the partial pressure of hydrogen gas is relatively decreased in the region, and the amount of hydrogen gas absorbed by the membrane electrode unit 20 in the region is decreased (step S2200). This causes the flow speed v1 of fuel gas and the pressure loss (=Pu-p1) across the pores 211n to be reduced (step S2300).

Such reduction in the pressure loss (=Pu-p1) in turn causes the pressure, at which fuel gas is supplied to the hydrogen electrode 22 through the pores 211n, to increase (step S2400). Specifically, the pressure p1 at which fuel gas is supplied through the pores 211n approaches the upstream side pressure Pu with respect to the pores 211n. This causes the total pressure to temporarily increase in this region (step S2500), which in turn causes nitrogen gas to be diffused (step S2600). This phenomenon can be understood as the suction due to the Bernoulli effect from the region in which the flow speed is v1, which is relatively slow, to the region in which the flow speed is v0, which is relatively high.

Although such analysis is presently inferential, it has been confirmed by the experiments conducted by the present inventors that the above configuration makes it possible to stably and steadily generate electricity for several hours without circulation in the fuel gas passage, due to some physical phenomena.

It has been clarified by the analyses and experiments conducted by the present inventors that the diameter and the pitch of the pores 211n of the fuel gas supply plate 21n may be set so that under predetermined operational conditions (rated operation conditions, for example), the flow speed or the pressure loss across the pores 211n occurs that is high or large enough so that the flow speed of the fuel gas that passes through the pores 211n sufficiently suppresses the back flow of the fuel gas due to the diffusion of nitrogen gas. For example, it has been confirmed that in a solid polymer electrolyte fuel cell, a preferable flow speed or pressure loss occurs when the opening ratio of the fuel gas supply plate 21n is set to about 1% or below. The opening ratio is the value obtained by dividing the sum of the opening sectional areas of all the pores 211n by the area of the fuel gas supply plate 21n. It has been confirmed by calculations conducted by the present inventors that in such an embodiment, the opening ratio is of the order of one hundredth of that of the circulation type fuel gas passage, and the power loss of the circulation pump (compressor) 228 (FIG. 2) for circulation becomes an excessive, unrealistic value.

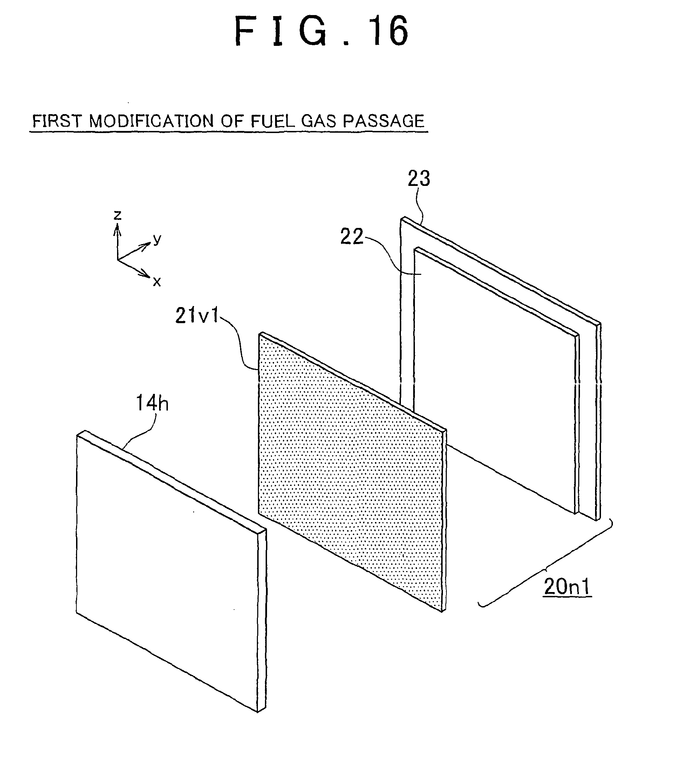

FIG. 16 is an explanatory diagram showing a first modification of the fuel gas passage. In the first modification, a dense porous member 21v1 that is more "denser" than the hydrogen electrode-side porous passage 14h, or exhibits a greater "pressure loss" than that of the hydrogen electrode-side porous passage 14h, functions as the fuel gas supply plate 21n. Specifically, the dense porous member 21v1 is made so that the dense porous member 21v1 separates the hydrogen electrode-side porous passage 14h, which provides the passage to distribute fuel gas, from the hydrogen electrode 22 and realizes the pressure loss or the inside flow speed of fuel gas that is determined in advance.

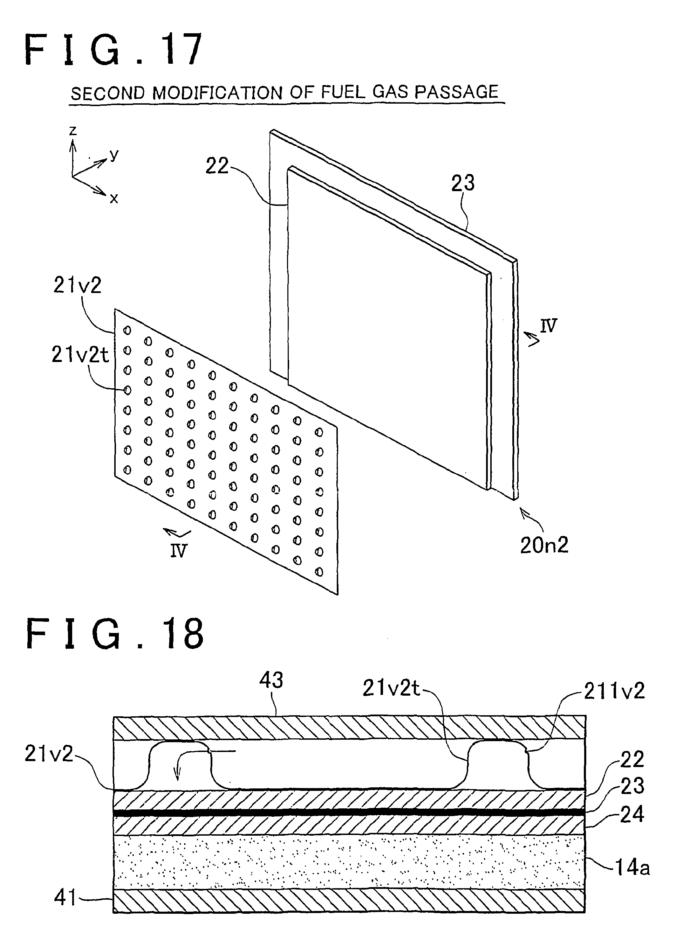

FIGS. 17 and 18 are explanatory diagrams showing a second modification of the fuel gas passage. In the second modification, a fuel gas supply plate 21v2 is made of a pressed metal plate. The fuel gas supply plate 21v2 has: protrusions 21v2t for forming the passage upstream of the fuel gas supply plate 21v2; and pores 211v2 that are formed in the protrusions 21v2t. This configuration is advantageous in that the hydrogen electrode-side porous passage 14h according to this embodiment can be omitted because the passage upstream of the fuel gas supply plate 21v2 is also formed by the integral protrusions 21v2t.

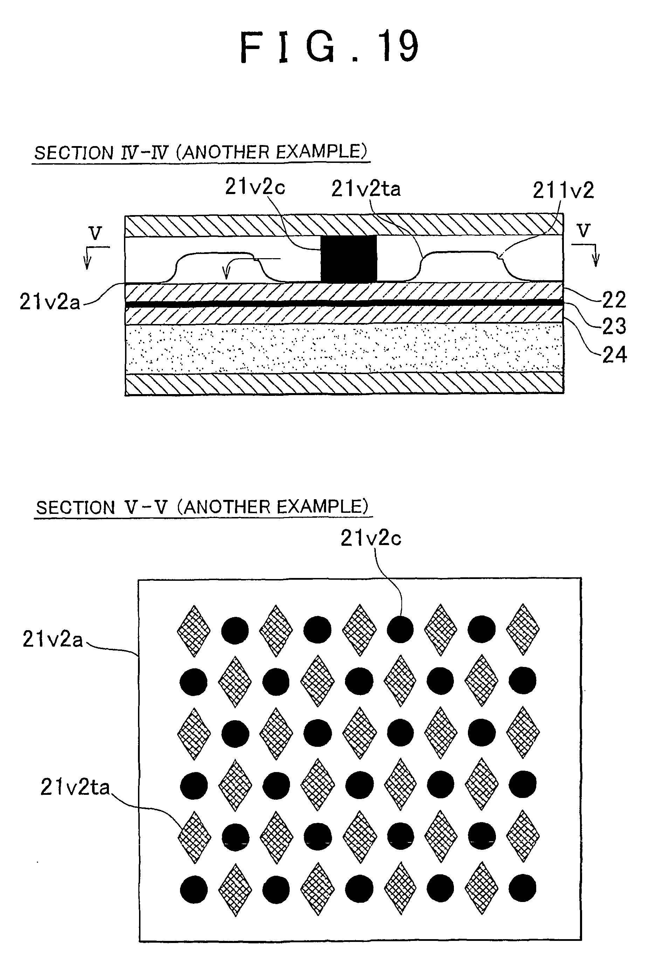

FIG. 19 is an explanatory diagram showing another configuration of the second modification. This example is configured so that the upstream side passage is formed by fixed dimension portions 21v2c having electric conductivity. This configuration is advantageous in that the degree of freedom of the shape of the fuel gas supply plate 21v2a is high because protrusions 21v2ta of a fuel gas supply plate 21v2a do not have to bear the load applied due to the stacked structure of the fuel cell stack 100n. For example, the protrusions 21v2ta may be configured so that the protrusions 21v2ta have a rhombic shape when viewed from above the fuel gas supply plate 21v2a.

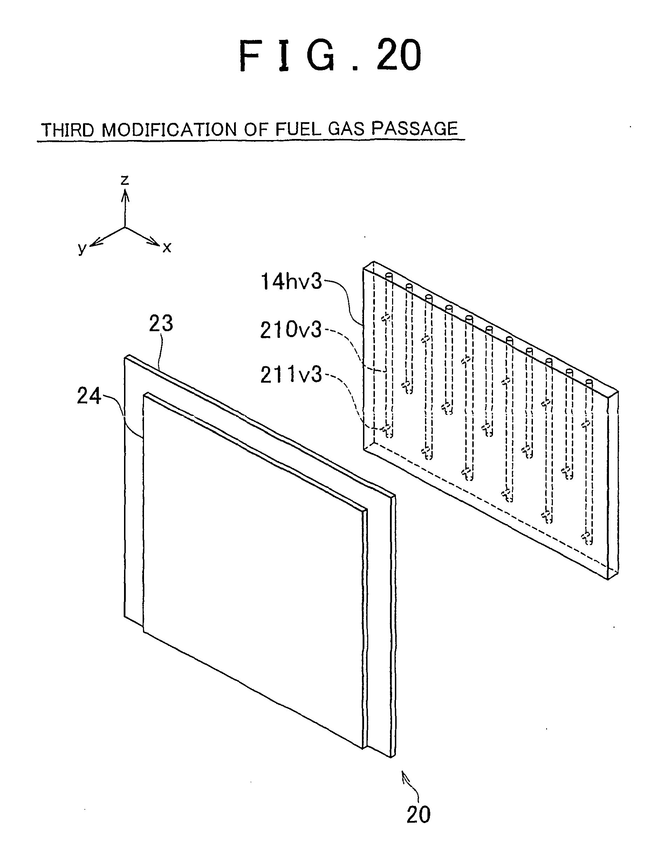

FIG. 20 is an explanatory diagram showing a third modification of the fuel gas passage. A passage 14hv3 of the third modification is an example in which a configuration is realized that distributes fuel gas to multiple regions through communication holes 210v3 that are formed in the porous member and pores 211v3, each being formed to extend from the corresponding communication hole 210v3 to the outside. In this way, the fuel gas passage may be configured so that the porous member has a function of distributing fuel gas.

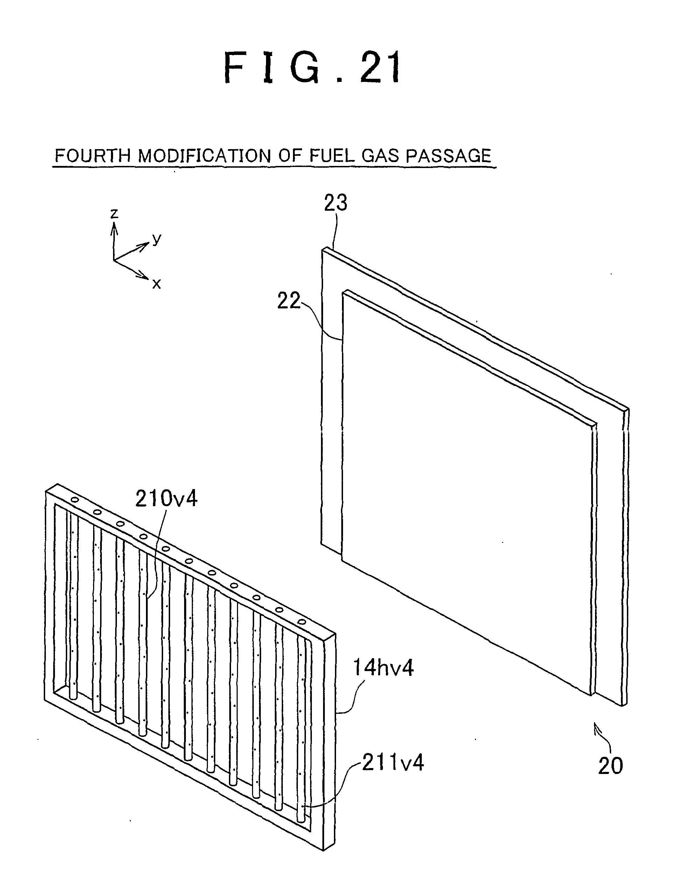

FIG. 21 is an explanatory diagram showing a fourth modification of the fuel gas passage. A configuration, in which fuel gas is distributed to multiple regions through pores 211v4, is realized by passages 14hv4 of the fourth modification using pipes 210v4 in which the pores 211v4 are formed, instead of using the porous member or the pressed metal material. As described above, the fuel gas passage is not limited to that using the porous member or the pressed metal plate, and it suffices that the fuel gas passage is configured so that fuel gas is distributed to the multiple regions.

Thus, the fuel gas passage, which use the fuel gas supply plate 21n, and the modifications thereof may be configured to have a passage for supplying fuel gas, directly for example, to the individual regions on the hydrogen electrode 22 without passing through other regions on the hydrogen electrode 22 on which fuel gas is consumed. Alternatively, fuel gas may be supplied in a direction from an out-of-plane position, which is preferably the passage separated from the hydrogen electrode 22, toward the hydrogen electrode 22, that is, in the direction that intersects the reaction surface (the catalyst surface, not shown) of the electrolyte 23. The term "consume" herein has a broad meaning, which includes both the consumption due to reaction and cross leaks. Meanwhile, the hydrogen electrode 22 may have a flat surface so that the accumulation of nitrogen in a recess does not occur.

Although, in the above-described embodiment and modifications, it is not necessary to cause the prescribed flow speed and the pressure loss to occur, it has been confirmed by the experiments and analyses conducted by the present inventors that remarkable effects are achieved by causing the prescribed flow speed and the pressure loss to occur.

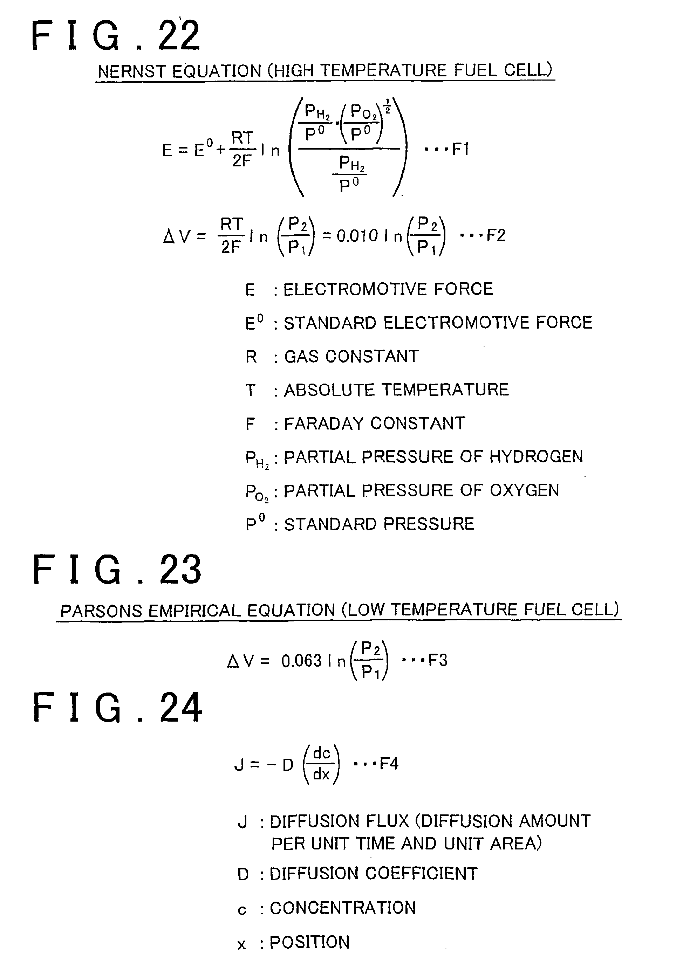

Such a configuration in which circulation of fuel gas is eliminated brings about the effect of realizing efficient, high-pressure operation of a fuel cell system, which cannot be anticipated by those skilled in the art at the time of filing this application. For example, as shown in FIG. 22, it is known that with regard to the electromotive force of the fuel cell, high power is achieved when the pressure in the fuel gas passage in a fuel cell system is increased, according to the Nernst equation. However, in the circulation type fuel gas supply system, increase of the pressure in the fuel gas passage increases the load of the pump for circulating fuel gas, which causes the problem that improvement of the efficiency of a system is restricted.

In FIG. 22, the equation F1 shows that the electromotive force (EMF) E has a positive correlation with the activity of hydrogen gas (partial pressure of hydrogen/normal pressure) and the activity of oxygen gas (partial pressure of oxygen/normal pressure). The equation F2 is the hydrogen gas term part, indicating that the electromotive force increases due to increase in the partial pressure of hydrogen (P₁→P₂).

This embodiment has a remarkable advantage that it is possible to increase pressure in a fuel cell system while avoiding increase in the load of the circulation pump by realizing a non-circulation type fuel cell, and it is therefore possible to reduce size and weight of and increase power of the system, which is particularly important in view of installation of the system in a vehicle. In particular, it has been technical knowledge common to those skilled in the art that increase of pressure in a small fuel cell system results in reduction of efficiency of the fuel cell system, and the above described advantage therefore cannot be anticipated by those skilled in the art at the time of filing this application.

In a small and lightweight, solid polymer electrolyte fuel cell, polymer electrolyte is used. Thus, such a solid polymer electrolyte fuel cell is particularly suitable for on-board use because an operation with differential pressure in which the pressure in the fuel gas side passage only is raised is easily achieved and the power is remarkably increased by increasing pressure, according to the empirical equation F3 (FIG. 23) found in 2000 by Parsons Inc. (James Larminie and Andrew Dicks, Fuel Cell Systems Explained, 2nd ed. (2003)). The empirical equation F3 is an equation corresponding to the equation F2, which is a theoretical equation highly related to high-temperature fuel cells.

In addition, this embodiment may also be configured so that the hydrogen electrode-side porous passage 14h is separated from the hydrogen electrode 22 by suppressing the diffusive flow of nitrogen gas from the hydrogen electrode 22 to the hydrogen electrode-side porous passage 14h. Such a separation becomes difficult as the diffusion speed of nitrogen gas becomes faster. However, in solid polymer electrolyte fuel cells that operate at low temperatures, it is relatively easy to realize such separation. This is because the diffusion speed becomes remarkably high as operation temperature rises. On the other hand, increase of pressure of fuel gas results in reduction in diffusion speed, and therefore, high-pressure operation of a solid polymer electrolyte fuel cell gives a very preferable embodiment.

FIG. 24 shows an equation F4 that represents Fick's first law concerning steady flow. In the equation F4, the diffusion speed of nitrogen gas is proportional to the concentration gradient and the diffusion coefficient of nitrogen gas. It is known that the diffusion coefficient has a positive correlation with temperature and has a negative correlation with pressure. Thus, it can be understood that the above advantageous effect is achieved.

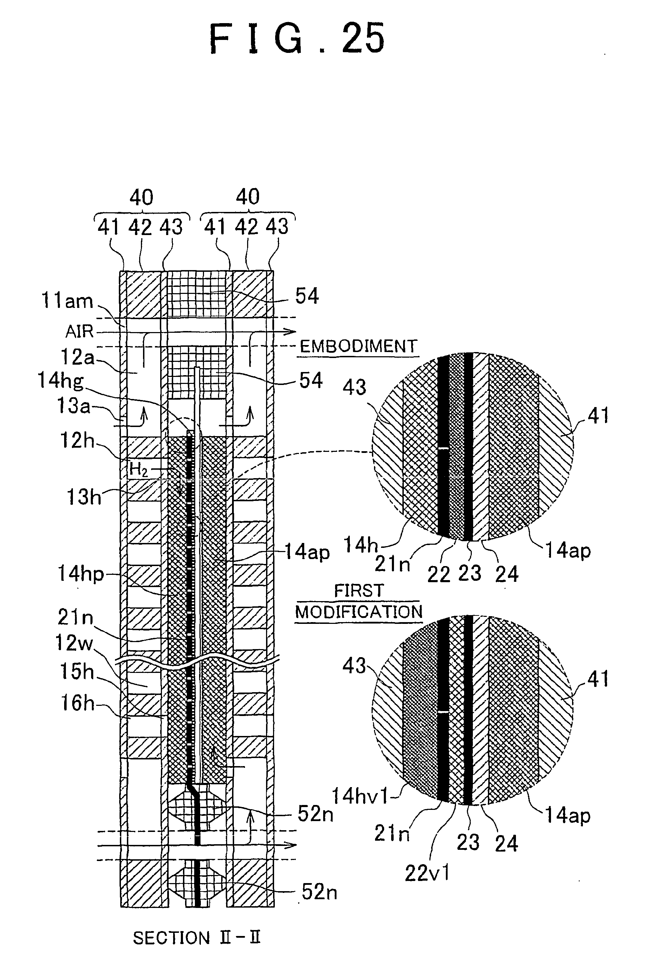

FIG. 25 is an explanatory diagram showing the difference between the density of the hydrogen electrode-side porous passage 14h and the density of the gas diffusion layer in the hydrogen electrode 22, which are located on the upstream side and the downstream side, respectively, of the fuel gas supply plate 21n according to this embodiment. This embodiment is configured so that the material for the upstream side, hydrogen electrode-side porous passage 14h has a density lower than that of the material for the gas diffusion layer in the downstream side hydrogen electrode 22, in other words, the material for the hydrogen electrode-side porous passage 14h causes a pressure loss less than that caused by the material for the gas diffusion layer in the downstream side hydrogen electrode 22. Such a configuration brings about an effect of reducing the pressure drop that occurs when fuel gas flows through the hydrogen electrode-side porous passage 14h. Thus, this configuration is advantageous in that the pressure of fuel gas that is applied to the plurality of pores 211n is easily made uniform.

On the other hand, a first modification shown in FIG. 25 is configured so that the density of or the pressure loss caused by the material for the gas diffusion layer in the downstream side hydrogen electrode 22 is lower or less than that of the material for the upstream side, hydrogen electrode-side porous passage 14h. Such a configuration is advantageous in that it is possible to prevent nitrogen gas from entering from the gas diffusion layer of a hydrogen electrode 22v1 into an upstream side, hydrogen electrode-side porous passage 14hv1. This is because the hydrogen electrode-side porous passage 14hv1 has a high density, or causes a large pressure loss, and therefore there is a strong tendency for the direction, in which nitrogen gas diffuses, to be the in-plane direction in the hydrogen electrode 22v1 rather than the direction toward the hydrogen electrode-side porous passage 14hv1. The uniformity of pressure of fuel gas applied to the plurality of pores 211n can be realized by varying the diameters and the pitches of the plurality of pores 211n, for example.

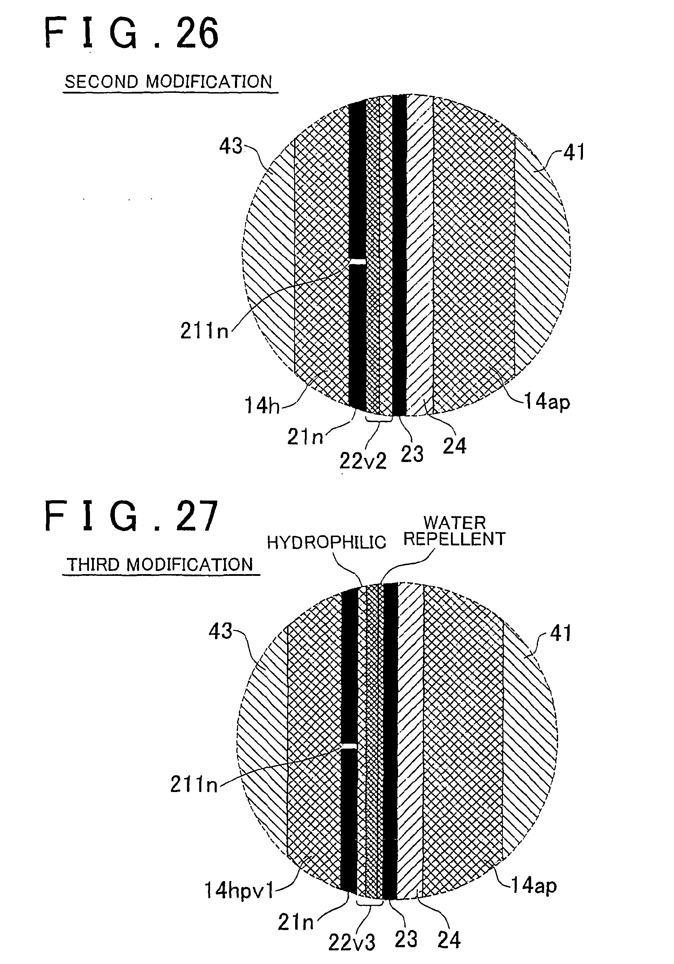

FIG. 26 is an explanatory diagram showing a gas diffusion layer of a hydrogen electrode 22v2 of a second modification. In the second modification, the gas diffusion layer of a hydrogen electrode 22v2 has a double layer structure. The gas diffusion layer is configured so that, in the double-layered gas diffusion layer, the density of or the pressure loss caused by the material for one layer that is next to the electrolyte membrane 23 is lower than that of the material for the other layer. Such a configuration is advantageous in that produced water discharged from the electrolyte membrane 23 is caused to diffuse toward the hydrogen electrode-side porous passage 14h, and an effect of suppressing blockage of gas supply due to flooding is achieved.

Such discharge of the produced water utilizes the physical property that the higher the density of the porous member is or the greater the pressure loss caused by the porous member is, the stronger the water absorbing force due to capillary force is. Thus, it suffices that the gas diffusion layer is configured such that the capillary force increases with the distance from the electrolyte membrane 23. Accordingly, the gas diffusion layer may be a single layered porous member in which the density or the like has a gradient, or a porous member constituted of three or more layers.

FIG. 27 is an explanatory diagram showing a gas diffusion layer of a hydrogen electrode 22v3 of a third modification. In the third modification, the gas diffusion layer of the hydrogen electrode 22v3 has a triple layer structure. The gas diffusion layer is configured so that, in the triple layered gas diffusion layer, the closer to the electrolyte membrane 23 a layer is, the higher the water repellency of the material for the layer is, or the lower the hydrophilicity of the material for the layer is. Such a configuration also is advantageous in that produced water discharged from the electrolyte membrane 23 is caused to diffuse, and an effect of suppressing flooding is achieved.

The density or the like used in the second modification is replaced by the hydrophilicity or the water repellency in such a configuration for causing produced water to be diffused and discharged. Thus, it suffices that the gas diffusion layer is configured such that the hydrophilicity becomes higher (or the water repellency becomes lower) with the distance from the electrolyte membrane 23. Accordingly, the gas diffusion layer may be a single layered porous member in which the hydrophilicity or the like has a gradient, or a porous member constituted of three or more layers. Note that the hydrophilicity and the water repellency may be given in combination, and in addition, the density or the like may be further varied.

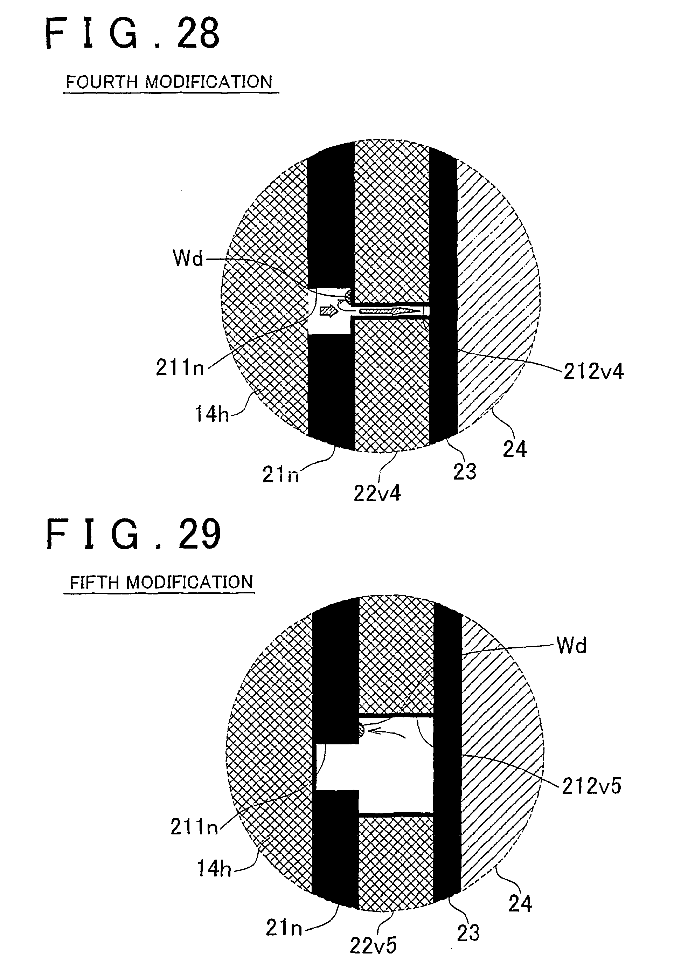

FIG. 28 is an explanatory diagram showing a gas diffusion layer of a hydrogen electrode 22v4 of a fourth modification. The gas diffusion layer of the fourth modification has a configuration that differs from the above described configurations in that connection holes 212v4 are formed at positions such as to connect with the pores 211n of the fuel gas supply plate 21n. The connection holes 212v4 have a function of fragmenting and diffusing the produced water built up on the surface of the catalyst layer (not shown) of the hydrogen electrode 22v4. In particular, in the fourth modification, the connection holes 212v4 have a diameter smaller than that of the pores 211n, and are configured so that the produced water wd discharged through the connection holes 212v4 is absorbed by the hydrogen electrode 22v4, so that an effect of suppressing clogging of the pores 211n with the produced water is achieved.

FIG. 29 is an explanatory diagram showing a gas diffusion layer of a hydrogen electrode 22v5 of a fifth modification. The gas diffusion layer of the fifth modification is the same as that of the fourth embodiment in that connection holes 212v5 are formed at positions such as to connect with the pores 211n of the fuel gas supply plate 21n and have a function of fragmenting and diffusing the produced water built up on the surface of the catalyst layer of the hydrogen electrode 22v5. However, the fifth modification differs from the fourth modification in that the connection holes 212v5 have a diameter greater than that of the pores 211n. The connection holes 212v5 are configured so that the produced water wd discharged through the connection holes 212v5 is blocked by the fuel gas supply plate 21n and absorbed by the hydrogen electrode 22v5. Thus, as in the case of the fourth modification, an effect of suppressing clogging of the pores 211n with the produced water is achieved.

Note that the connection holes 212v4 and 212v5 can fragment the produced water when these holes are connected to the pores 211n, and it is not necessary that the diameters of the connection holes 212v4 and 212v5 differ from that of the pores 211n.

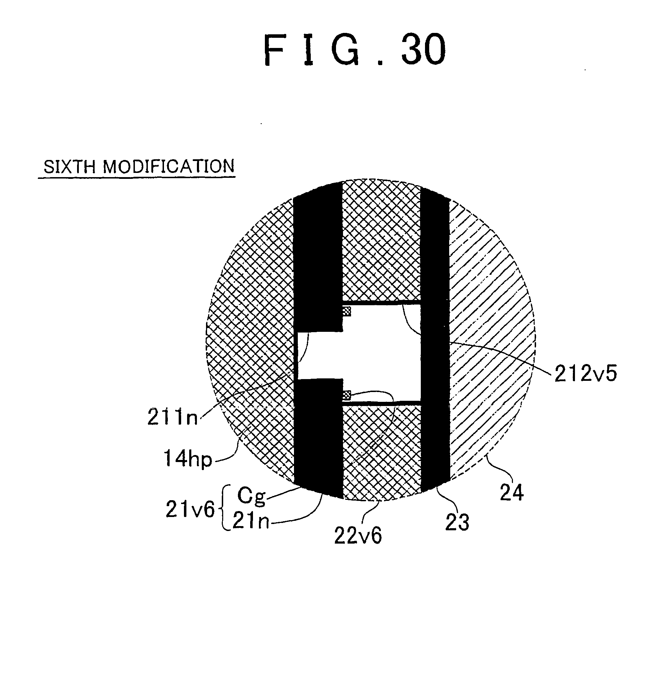

FIG. 30 is an explanatory diagram showing a gas diffusion layer of a hydrogen electrode 22v6 of a sixth modification. The sixth modification is the same as the fifth modification in that the connection holes 212v5 are formed at positions such as to connect with the pores 211n of the fuel gas supply plate 21n, and that the connection holes 212v5 have a diameter greater than that of the pores 211n. However, the fuel gas supply plate 21v6 of the sixth modification differs from that of the fifth modification in that the fuel gas supply plate 21v6 has a positioning member Cg that determines the positional relationship between the pores 211n and the hydrogen electrode 22v6. The positioning member Cg determines the positional relationship between the pores 211n of the fuel gas supply plate 21v6 and the connection holes 212v5, thereby bringing about an advantage that the above-described effects are easily achieved.

Such an effect of suppressing flooding achieved by such means is particularly important in a system in which fuel gas is not steadily discharged during generation of electricity. This is because in systems in which fuel gas is not steadily discharged during generation of electricity, it is difficult to utilize the discharge of water vapor accompanying the discharge of fuel gas. The above-described configuration has an important function of realizing steady operation of a fuel cell system in which produced water is appropriately diffused without the need to discharge water vapor by discharging fuel gas, and in which the cycle of using the produced water in humidifying fuel gas is smoothly continued to eliminate the need to circulate fuel gas.

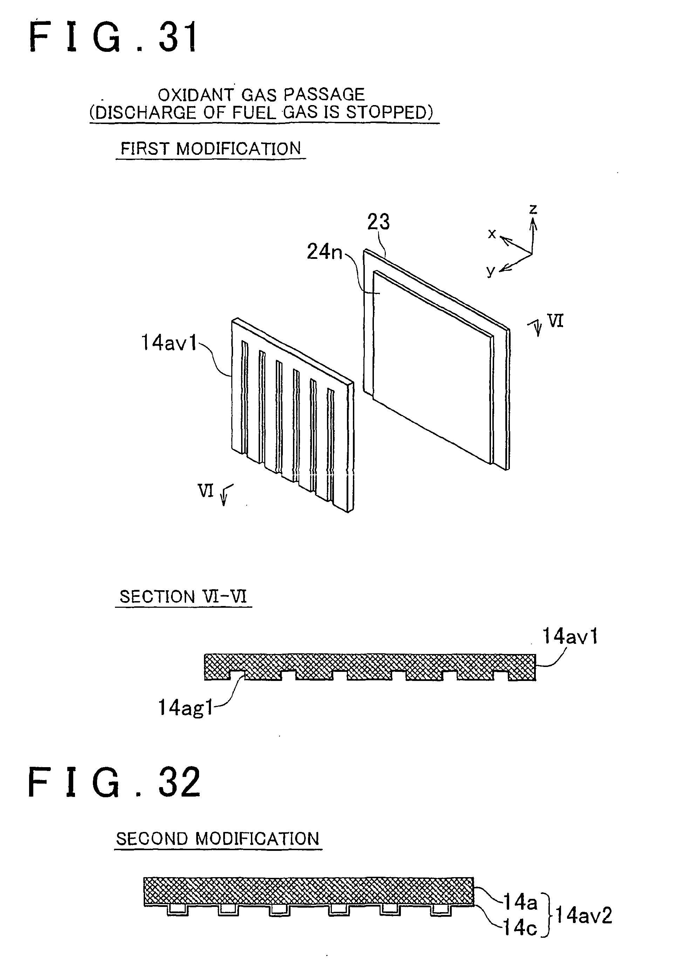

FIGS. 31 to 35 are explanatory diagrams showing modifications of the air electrode-side porous passage 14a. These modifications are configured to provide technical means to solve problems related to the air passage side that are caused by making the fuel gas supply system non-circulation type. This problem is a new one that was first found by the present inventors.

Specifically, the present inventors have found that the configuration in which fuel gas is not circulated not only concerns the fuel gas passage but also affects the design of the air passage. For example, as can be seen from the related art shown in FIG. 5, in the related art, the flow of fuel gas and the flow of air are directed in the opposite directions, whereby it is possible to make the wetness of the membrane electrode unit 20 uniform. More specifically, in the case of the reaction gas passage of the related art, because the reaction gas is humidified by the water discharged through the hydrogen electrode-side electrode layer 22 and the air electrode-side electrode layer 24, and the humidity of the reaction gas therefore increases from the inlet to the outlet of the passage, it is possible to make the wetness of the membrane electrode unit 20 uniform by adopting a countercurrent configuration in which the outlet of one electrode side passage is located near the inlet of the other electrode side passage.

In the above-described embodiment and modifications, however, fuel gas is supplied to the membrane electrode unit 20 in a state where the partial pressure of hydrogen is more uniform than that in the case where fuel gas is circulated, and the above-described effect achieved by the countercurrent configuration is not brought about. The present inventors have newly created the following structure as means for solving such a new problem.

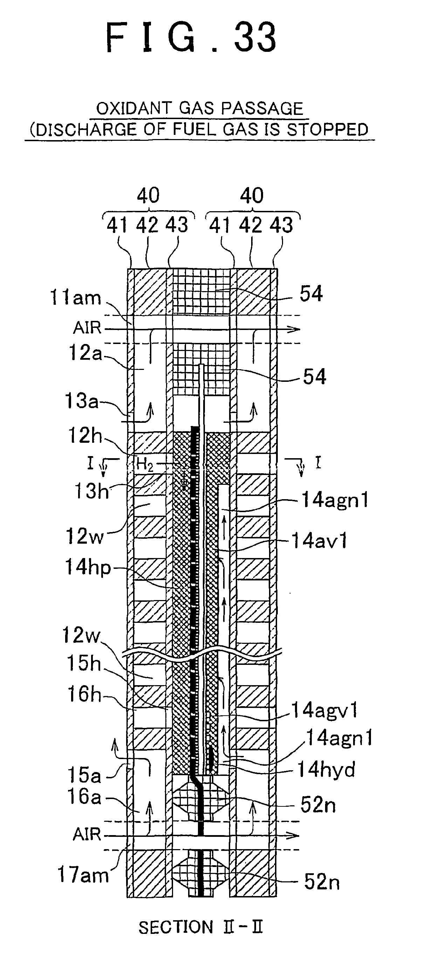

FIG. 31 is an explanatory diagram showing an air electrode-side porous passage 14av1 of a first modification. FIG. 32 is an explanatory diagram showing an air electrode-side porous passage 14av2 of a second modification. FIG. 33 is an explanatory diagram showing inner passages of a fuel cell stack having the air electrode-side porous passage 14av1 of the first modification. The air electrode-side porous passage 14av2 of the second modification is configured so that an effect similar to that achieved by the air electrode-side porous passage 14av1 of the first modification is achieved, by providing the air electrode-side porous passage 14a of the embodiment with groove passage member (pressed metal sheet) 14c. The provision of the groove passage member 14c may be performed in combination with the formation of grooves in the air electrode-side porous passage 14av1. The inner surface of the grooves may be treated to have hydrophilicity.

The air electrode-side porous passage 14av1 of the first modification differs from the air electrode-side porous passage 14a of the embodiment in that a plurality of grooves 14ag1 are formed on the side opposite to the air electrode-side electrode layer 24 side on which the air electrode-side porous passage 14av1 contacts the air electrode-side electrode layer 24. In this configuration, air is supplied to the air electrode-side porous passage 14av1 through the plurality of grooves 14ag1, so that it is possible to moderate the gradient of humidity from an upstream region to a downstream region. Thus, it is possible to suppress drying out of the air electrode-side porous passage 14av1 near the air supply hole 13a (inlet side) and flooding in the air electrode-side porous passage 14av1 near the air discharge passage 16a (outlet side).

In addition, the portion of the air electrode-side porous passage 14av2 shown in FIG. 32 near the air supply hole 13a (inlet side) is treated to have hydrophilicity, and the passage is configured so that air flows upward. The hydrophilic treatment brings about an effect of collecting water and suppressing drying out. The upward air flow brings about an effect of keeping water in a lower portion by virtue of gravity.

In the related art shown in FIG. 5, the passage is configured so that air flows upward to bring about the countercurrent. Thus, if the direction in which fuel gas flows is inverted, the direction of the air passage is also inverted. In the embodiment and modifications, fuel gas is directly and uniformly distributed over the membrane electrode unit 20, and the concept of the upstream and downstream as described above does not exist with respect to the membrane electrode units 20. Thus, the air passage may be configured so that air flows upward.

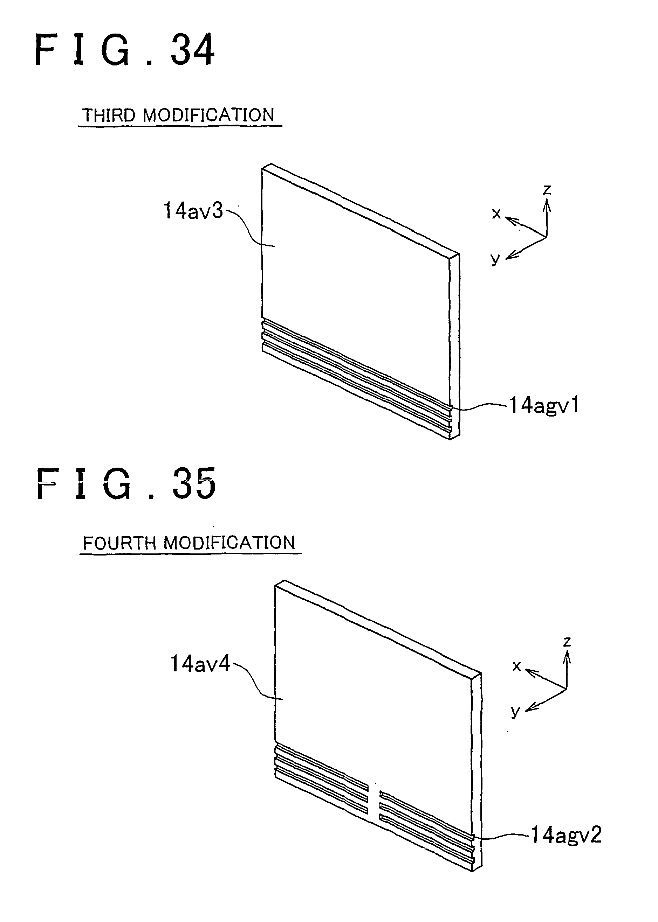

FIG. 34 is an explanatory diagram showing an air electrode-side porous passage 14av3 of a third modification. The air electrode-side porous passage 14av3 of the third modification differs from the air electrode-side porous passage 14av1 of the first modification in that the portion of the air electrode-side porous passage 14av3 near the air discharge passage 16a (outlet side) has water keeping grooves 14agv1 on the air electrode-side electrode layer 24 side. It has been confirmed by the experiments conducted by the present inventors that it is preferable that the width of each water keeping groove 14agv1 be about 1 mm or greater.

The water keeping grooves 14agv1 may pass through (divide) the air electrode-side porous passage 14av3, for example. In addition, as shown in FIG. 35, the water keeping grooves 14agv1 themselves may be divided and may be configured so that the width and the length vary depending on the position.

Moreover, in the above-described embodiment and modifications, fuel gas is supplied to the membrane electrode unit 20 with the partial pressure of hydrogen almost uniform, and therefore, problems arise that are different from those with the related art, concerning the method of making the reaction distribution and the distribution of heat generation corresponding to the reaction distribution uniform, in addition to the problem in controlling moisture.

When the flow of fuel gas and the flow of air are made to flow in the opposite directions as described above, an effect of making reaction distribution uniform is also achieved as can be seen from the Nernst equation (FIG. 22), in addition to the effect of making the wetness uniform. Specifically, a downstream side region of the air passage in which the partial pressure of oxygen is low is opposed to an upstream side region (FIG. 9) of the fuel gas passage in which the partial pressure of hydrogen is high; on the other hand, an upstream side region of the air passage in which the partial pressure of oxygen is high is opposed to a downstream region of the fuel gas passage in which the partial pressure of hydrogen is low, so that it is possible to make reaction in the membrane electrode unit 20 uniform.

The air electrode-side porous passage 14av1 of the first modification shown in FIG. 31 also brings about an effect of reducing the difference in the partial pressure of oxygen in the supplied air between an upstream region and a downstream region. Thus, the air electrode-side porous passage 14av1 is advantageous in that it can solve the above-described problem. However, in the embodiment and modifications, it is assumed that air is discharged instead of fuel gas, and a problem is the trade-off between the air supply power and the uniformization of the partial pressure of oxygen supplied.

In addition, because how the moisture in the air passage is controlled affects the fuel gas passage through the inverse diffusion of water, the air passage may be designed in consideration of the influence on the fuel gas passage. In particular, in a system in which fuel gas is not steadily discharged during generation of electricity as described above, humidification of fuel gas is carried out by the water diffused from the air passage, and therefore, such a design is important. Specifically, it is preferable that discharge of produced water be promoted to effectively suppress flooding in the oxidant side electrode, or relatively uniform inverse diffusion toward the fuel gas passage side be realized. Such an effect is also achieved by the following configuration, and the following configuration may be combined with the above-described configuration.

Specifically, the multi-layer structure, which includes the double layer structure, of the hydrogen electrode 22v3 of the third modification (FIG. 27) can be applied to the air electrode-side electrode layer 24. In the third modification, the gas diffusion layer of a hydrogen electrode 22v3 has a triple layer structure. The gas diffusion layer is configured so that, in the triple layered gas diffusion layer, the closer to the electrolyte membrane 23 a layer is, the higher the water repellency of the material for the layer is, or the lower the hydrophilicity of the material for the layer is. Also in the case of the air passage, such a configuration is advantageous in that produced water discharged from the electrolyte membrane 23 is diffused, and an effect of suppressing flooding is achieved.

For the purpose of causing produced water to be diffused and discharged in this way, it suffices that the gas diffusion layer is configured such that the hydrophilicity increases (or the water repellency decreases) with the distance from the electrolyte membrane 23. Accordingly, the gas diffusion layer may be a single layered porous member in which the hydrophilicity or the like has a gradient, or a porous member constituted of three or more layers. Note that the hydrophilicity and the water repellency may be given in combination, and in addition, the density or the like may be further varied. By cooperatively controlling the moisture in the air passage and the moisture in the fuel gas passage, it is possible to achieve preferable inverse diffusion and appropriate control of the moisture in the fuel gas passage.

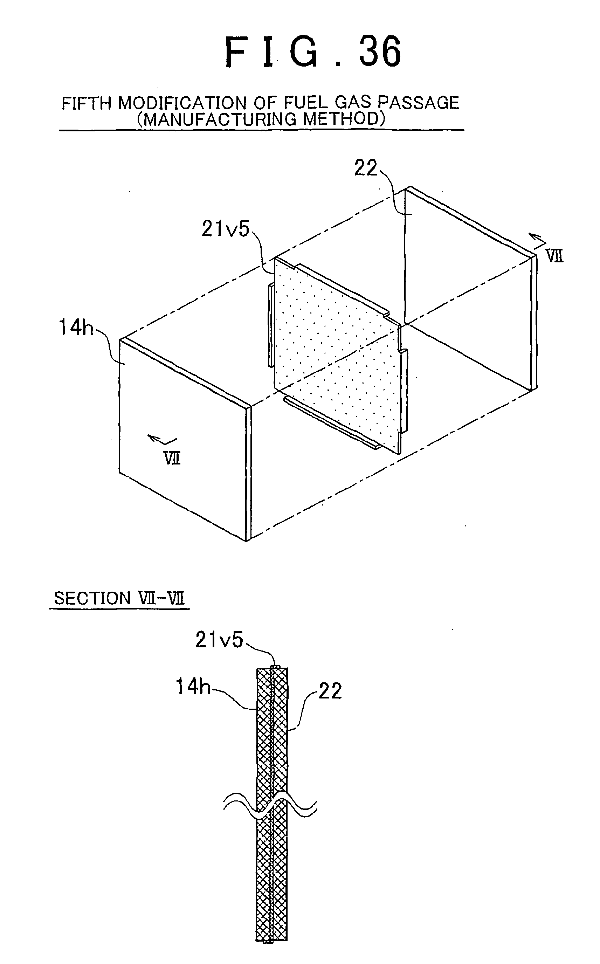

FIG. 36 is an explanatory diagram showing a fuel gas supply plate 21v5 of a fifth modification. In the above-described embodiment and modifications, when the fuel gas supply plate 21v5 is added, a new manufacturing step of placing the fuel gas supply plate 21v5 is added. The fuel gas supply plate 21v5 of the fifth modification is such that the edge portions are bent to facilitate positioning when the fuel gas supply plate 21v5 is placed.

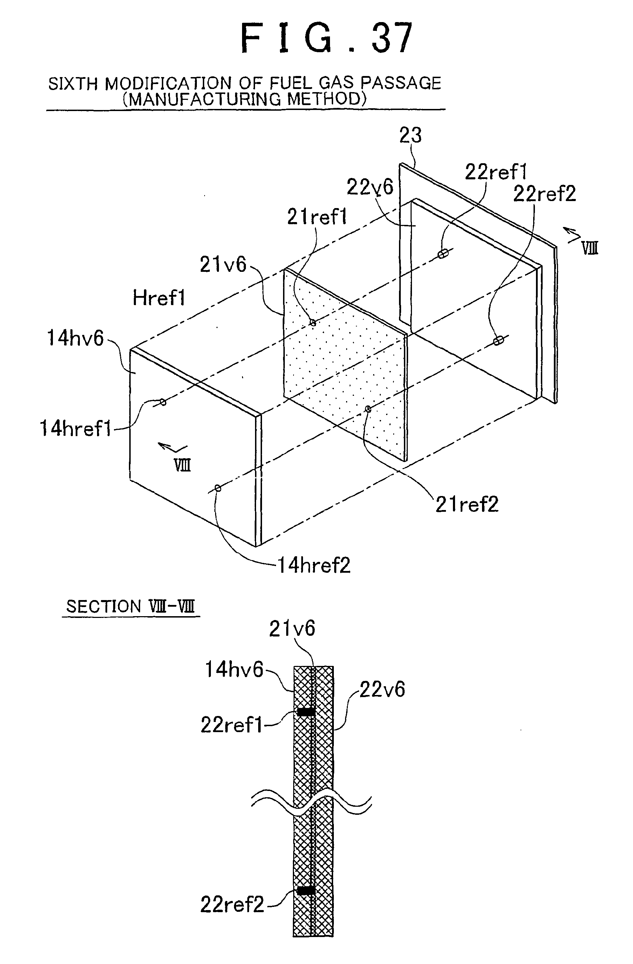

FIG. 37 is an explanatory diagram showing a fuel gas supply plate 21v6 of a sixth modification. The sixth modification is configured as follows. Specifically, the hydrogen electrode-side electrode layer 22 has two positioning pins 22ref1 and 22ref2 in the passage; the fuel gas supply plate 21v6 has fitting holes 21ref1 and 21ref2 for positioning; and a hydrogen electrode-side porous passage 14hv6 has fitting holes 14ref1 and 14ref2 for positioning.

Disposing two positioning pins 22ref1 and 22ref2 in the passage in this way is contrary to the common technical knowledge at the time of filing the application, that is, the knowledge that positioning pins should be disposed outside the passage. According to the common technical knowledge at the time of filing the application, positioning pins are disposed outside the passage because gas leaks through the gap between the walls of the fitting holes and the pins. However, despite such a common technical knowledge, after giving consideration to the configuration, the present inventors found that leakage is not so problematic because it occurs between fuel gas passages. As a result, reduction in size and weight is achieved by eliminating the space for the positioning pins outside the passage.

Although some embodiments of the invention have been described above, the invention is not limited to such embodiments at all, and the invention can be implemented in various forms within the scope not departing from the gist of the invention. In particular, of the constituent elements of the above-described embodiment, any elements other than the elements described in the independent claims are additional elements and can be removed as appropriate. In addition, modifications as described below are also feasible, for example.

The invention may further include the following configuration. (1) The regions to which fuel gas is distributed through the fuel gas supply plate may be mutually separated by separation walls. (2) The hydrogen electrode-side electrode layer may have a diffusion structure (radial grooves, cobweb-like grooves, or variation in gas permeability) that makes it easier for gas to be diffused apart from the pores along the plane of the fuel gas supply plate. (3) The hydrogen electrode-side electrode layer may have separation walls that restrict flow of fuel gas between the regions to which fuel gas is distributed through the pores. However, there is no need to give one-to-one relationship between each pore and the corresponding block. The blocks may be arranged to have a honeycomb structure. The size of each block may be varied so that the amount of fuel gas supplied through the pores per unit area becomes uniform to the extent possible. The hydrogen electrode-side electrode layer may be configured so that the porosity of the hydrogen electrode-side electrode layer increases toward the downstream region of the hydrogen electrode-side porous passage 14 in which supply of fuel gas is more likely to be hindered. (4) The fuel gas supply plate may be configured so that in at least one of the upstream side or the downstream side of the passage in the fuel gas supply plate, accumulation of nitrogen (the vicious circle shown in FIGS. 8 and 9, for example) is suppressed through diffusion using a fluid circulating device, such as an ejector. (5) In a fuel cell system, the fuel gas supply passage may be provided with a storage portion in which nitrogen gas and other unreactive fluids are stored. (6) In designing the fuel gas supply passage, the variation and adjustment of the resistance to flow in part of the passage, which include adjustment of porosity or the number of grooves and adjustment (variation) of the width of grooves, or setting of the arrangement and/or direction of the passage may be conducted so as to realize the function similar to the function of supplying fuel gas performed by the fuel gas supply plate. Specifically, fuel gas may be supplied in multiple different directions (from the periphery to the central portion, for example) in the fuel gas supply passage. (7) In the fuel cell system, restricting the output of the fuel cell at the time of start within a predetermined range, which includes inhibiting the output, may be performed to suppress unexpected reduction in output. Such a restriction of output at the time of start promotes the attainment of an equilibrium state of the concentration of nitrogen gas, or promotes the optimization of the partial pressure of hydrogen in the hydrogen electrode-side electrode layer, by virtue of suppression of consumption of hydrogen gas. (8) A fuel cell system may supply fuel gas to a fuel cell having a plurality of fuel gas supply manifolds. In this case, the flow rate and the pressure of fuel gas that is supplied to the manifolds may be regulated independently for each manifold to make supply of fuel gas to the hydrogen electrode-side electrode layer uniform. (9) In a fuel cell system, the fuel gas supply passage may be provided with a buffer tank inside or outside the fuel cell. The buffer tank may be configured such that the buffer tank is connected to the fuel gas supply passage via a valve, the valve is opened at the time of start of the fuel cell system to store nitrogen gas, etc. accumulated while operation is stopped, and the valve is opened at the time of stoppage of the fuel cell system to discharge the stored nitrogen gas, etc. (10) The entire surface of the fuel gas supply plate on the hydrogen electrode-side electrode layer side or the walls of the pores in the fuel gas supply plate may be treated to have water repellency. In addition, the fuel gas supply plate may be configured so as to have a difference in the hydrophilicity and/or the water repellency between both sides of the fuel gas supply plate. Giving hydrophilicity and water repellency can be carried out by gold plating or water repellent coating, for example. (11) The fuel gas supply plate may have a plurality of layers. In the case of the structure having a plurality of layers, the fuel gas supply plate may be configured so that the number of through holes is fewer in the layer closer to the upstream side, and the number of through holes is greater in the layer closer to the downstream side.

Although, in the above-described embodiment, the solid polymer electrolyte fuel cell is cited, the invention is not limited to this, but can be applied to other types of fuel cells, such as a solid oxide fuel cell, a molten carbonate fuel cell, and a phosphoric-acid fuel cell. However, it has been found by the present inventors that when the invention is applied to the solid polymer electrolyte fuel cell, the above-described remarkable effects are achieved.

Although, in the above-described embodiment, pure hydrogen gas is used as the fuel gas, when an electrolyte that is permeable to impurities is used, for example, a reformed gas that contains such impurities can be used.

## Claims

1. A fuel cell comprising:
a membrane electrode unit, including:
an electrolyte (23);
an anode (22) that is placed on one side of the electrolyte (23) and has a fuel gas consumption surface on which fuel gas is consumed;
a cathode (24) that is placed on the other side of the electrolyte (23) and has an oxidant gas consumption surface on which oxidant gas is consumed; and
a fuel gas passage (225n) including:
a first passage (14h) for distributing fuel gas to previously set regions on the fuel gas consumption surface,
a second passage (22) for supplying the distributed fuel gas to the regions, and
a fuel gas supply portion (21n) for supplying fuel gas from the first passage (14h) to the second passage (22),
the fuel cell being **characterized in that**:
the fuel gas supply portion (21n) is sandwiched between the first passage (14h) and the second passage (22),
the fuel cell is configured to operate while consuming most of the supplied fuel gas in the regions on the fuel gas consumption surface, and
the fuel gas passage (225n) has a fuel gas leakage suppression portion (14hg, 52n) for suppressing leakage of fuel gas between the first passage (14h) and the second passage (22).

2. The fuel cell according to claim 1, wherein
at least one of the first passage (14h) and the second passage (22) is formed by a porous member, and
the fuel gas leakage suppression portion (14hg) is formed as a peripheral portion of the porous member that has a porosity lower than a porosity of an inner portion of the porous member.

3. The fuel cell according to any one of claims 1 or 2, wherein the fuel gas leakage suppression portion (14hg1) is a member that is formed in one body, which extends to at least part of a peripheral portion of the first passage (14h) and at least part of a peripheral portion of the second passage (22).

4. The fuel cell according to any one of claims I or 2, wherein the fuel gas leakage suppression portion (14hg, 52n) is a spacer that is disposed on at least one side of the fuel gas supply portion (21n), and provides at least one of the first passage (14h) and the second passage (22).

5. The fuel cell according to any one of claims 1 to 4, wherein at least one of the first passage (14h) and the second passage (22) has a honeycomb structure.

6. The fuel cell according to claim 1, wherein
the fuel gas supply portion (21n) is formed as a metal plate that includes a reaction gas leakage suppression portion (52n) for suppressing gas leakage that causes the fuel gas and the oxidant gas to mix.

7. A vehicle equipped with a fuel cell, comprising:
the fuel cell (200) according to any one of claims 1 to 6; and
a driving unit (300) that drives the vehicle according to electric power supplied from the fuel cell.

## Patentansprüche

1. Brennstoffzelle, aufweisend:
eine Membranelektrodeneinheit, beinhaltend:
einen Elektrolyten (23);
eine Anode (22), die auf eine Seite des Elektrolyten (23) angeordnet ist und eine Brenngasverbrauchsoberfläche aufweist, auf der ein Brenngas verbraucht wird;
eine Kathode (24), die auf der anderen Seite des Elektrolyten (23) angeordnet ist und eine Oxidansgasverbrauchsoberfläche aufweist, auf der ein Oxidansgas verbraucht wird; und
eine Brenngasleitung (225n), beinhaltend:
eine erste Leitung (14h) zum Verteilen eines Brenngases auf zuvor bestimmte Bereiche auf der Brenngasverbrauchsoberfläche,
eine zweite Leitung (22) zum Zuführen des verteilten Brenngases auf die Bereiche, und
einen Brenngaszuführbereich (21n) zum Zuführen von Brenngas von der ersten Leitung (14h) zu der zweiten Leitung (22),
wobei die Brennstoffzelle **dadurch gekennzeichnet ist, dass**
der Brenngaszuführbereich (21n) von der ersten Leitung (14h) und der zweiten Leitung (22) beidseitig umgeben ist,
die Brennstoffzelle so konfiguriert ist, dass sie arbeitet, während ein Großteil des zugeführten Brenngases in den Bereichen auf der Brenngasverbrauchsoberfläche verbraucht wird, und
die Brenngasleitung (225n) einen Brenngasausström-Verhinderungsbereich (14hg, 52n) zum Verhindern eines Ausströmens von Brenngas zwischen der ersten Leitung (14h) und der zweiten Leitung (22) aufweist.

2. Brennstoffzelle nach Anspruch 1, wobei
zumindest die erste Leitung (14h) und/oder die zweite Leitung (22) durch ein poröses Element ausgebildet ist, und
der Brenngasausström-Verhinderungsbereich (14hg) als ein Umfangsbereich des porösen Elements gebildet ist, der eine Porosität aufweist, die geringer als eine Porosität eines inneren Bereichs des porösen Elements ist.

3. Brennstoffzelle nach einem der Ansprüche 1 oder 2, wobei der Brenngasausström-Verhinderungsbereich (14hg1) ein Element ist, das in einem Körper ausgebildet ist, der sich zumindest bis zu einem Teil eines Umfangsbereichs (14h) der ersten Leitung und zumindest einem Teil eines Umfangsbereichs der zweiten Leitung (22) erstreckt.

4. Brennstoffzelle nach einem der Ansprüche 1 oder 2, wobei der Brenngasausström-Verhinderungsbereich (14hg, 52n) ein Abstandhalter ist, der auf zumindest einer Seite des Brenngaszuführbereichs (21n) angeordnet ist und zumindest die erste Leitung (14h) und/oder die zweite Leitung (22) bereitstellt.

5. Brennstoffzelle nach einem der Ansprüche 1 bis 4, wobei zumindest die erste Leitung (14h) und/oder die zweite Leitung (22) eine Wabenstruktur aufweist.

6. Brennstoffzelle nach Anspruch 1, wobei
der Brenngaszuführbereich (21n) aus einer Metallplatte gebildet ist, die einen Reaktionsgasausström-Verhinderungsbereich (52n) zum Verhindern eines Ausströmens von Gas beinhaltet, wodurch bewirkt wird, dass sich das Brenngas und das Oxidansgas vermischen.

7. Fahrzeug, ausgestattet mit einer Brennstoffzelle, aufweisend:
die Brennstoffzelle (200) nach einem der Ansprüche 1 bis 6; und
eine Antriebssteuerungseinheit (300), die das Fahrzeug gemäß einer von der Brennstoffzelle zugeführten elektrischen Leistung antreibt.

## Revendications

1. Pile à combustible comprenant :
un module d'électrodes et de membrane, incluant :
un électrolyte (23) ;
une anode (22) qui est placée d'un côté de l'électrolyte (23) et possède une surface de consommation de gaz combustible sur laquelle se consume du gaz combustible ;
une cathode (24) qui est placée de l'autre côté de l'électrolyte (23) et possède une surface de consommation de gaz oxydant sur laquelle se consume du gaz oxydant ; et
un passage (225n) de gaz combustible incluant :
un premier passage (14h) destiné à répartir du gaz combustible vers des régions déterminées préalablement sur la surface de consommation de gaz combustible ;
un second passage (22) destiné à délivrer aux régions le gaz combustible réparti ; et
une portion (21n) de délivrance de gaz combustible destinée à délivrer du gaz combustible du premier passage (14h) au second passage (22),
la pile à combustible étant **caractérisée :**
**en ce que** la portion (21n) de délivrance de gaz combustible est prise en sandwich entre le premier passage (14h) et le second passage (22) ;
**en ce que** la pile à combustible est constituée pour fonctionner en consommant la plupart du gaz combustible délivré dans les régions sur la surface de consommation de gaz combustible ; et
**en ce que** le passage (225n) de gaz combustible possède une portion (14hg, 52n) de suppression de fuite de gaz combustible destinée à supprimer la fuite de gaz combustible entre le premier passage (14h) et le second passage (22).

2. Pile à combustible selon la revendication 1,
dans laquelle au moins l'un du premier passage (14h) et du second passage (22) est formé par un organe poreux, et
dans laquelle la portion (14hg) de suppression de fuite de gaz combustible est formée en tant que portion périphérique de l'organe poreux qui a une porosité plus basse que la porosité de la portion interne de l'organe poreux.

3. Pile à combustible selon l'une quelconque des revendications 1 ou 2, dans laquelle la portion (14hg1) de suppression de fuite de gaz combustible est un organe qui est formé d'un seul corps, et qui s'étend jusqu'à au moins une partie de la portion périphérique du premier passage (14h) et au moins une partie d'une portion périphérique du second passage (22).

4. Pile à combustible selon l'une quelconque des revendications 1 ou 2, dans laquelle la portion (14hg, 52n) de suppression de fuite de gaz combustible est un écarteur qui est disposé sur au moins un côté de la portion (21n) de délivrance de gaz combustible, et alimente au moins l'un du premier passage (14h) et du second passage (22).

5. Pile à combustible selon l'une quelconque des revendications 1 à 4, dans laquelle au moins l'un du premier passage (14h) et du second passage (22) à une structure en nid d'abeilles.

6. Pile à combustible selon la revendication 1, dans laquelle la portion (21n) de délivrance de gaz combustible a la forme d'une plaque métallique qui inclut une portion (52n) de suppression de fuite de gaz de réaction destinée à supprimer une fuite de gaz qui fait que le gaz combustible et le gaz oxydant se mélangent.

7. Véhicule équipé d'une pile à combustible, comprenant :
la pile à combustible (200) selon l'une quelconque des revendications 1 à 6 ; et
un module (300) d'entraînement qui entraîne le véhicule en fonction de l'énergie électrique délivrée par la pile à combustible.
